# EUROPÄISCHE PATENTSCHRIFT

(11) **EP 3 078 004 B1**
(45) Veröffentlichungstag und Bekanntmachung des Hinweises auf die Patenterteilung: **15.02.2023**
(21) Anmeldenummer: 14812151.0
(22) Anmeldetag: 28.11.2014
(51) Int. Cl.: G07D 7/20, G07D 7/128, B42D 25/305, B42D 25/36, B42D 25/324, B42D 25/328, B42D 25/378, B42D 25/337, G06T 7/13, G07D 7/00, G07D 7/206

(54) **VERFAHREN ZUM AUTHENTIFIZIEREN EINES SICHERHEITSELEMENTS**
METHOD FOR THE AUTHENTIFICATION OF A SECURITY ELEMENT
PROCEDE DE AUTHENTIFACTION D'UN ÉLÉMENT DE SÉCURITÉ

(30) Priorität: 02.12.2013 DE 102013113340; 18.07.2014 DE 102014110103
(43) Veröffentlichungstag der Anmeldung: 12.10.2016
(73) Patentinhaber: Leonhard Kurz Stiftung & Co. KG, 90763 Fürth (DE); OVD Kinegram AG, 6300 Zug (CH); adorsys Gmbh & Co. KG, 90429 Nürnberg (DE)
(72) Erfinder: SCHILLING, Andreas, CH-6332 Hagendorn (ZG) (CH); FRIESER, Uwe, 91186 Büchenbach (DE); SCHMITZER, Benno, 90513 Zirndorf (DE); TOMPKIN, Wayne Robert, CH-5400 Baden (CH); METZGER, Jürgen, 90455 Nürnberg (DE); WRONDRATSCHEK, Ralf, 07774 Dornburg-Camburg OT Camburg (DE); GUGEL, Alexander, 90530 Wendelstein (DE)
(74) Vertreter: Louis Pöhlau Lohrentz
(86) Internationale Anmeldenummer: PCT/EP2014/075909
(87) Internationale Veröffentlichungsnummer: WO 2015/082332

(56) Entgegenhaltungen:
- WO-A2-2007/087498
- DE-A1-102004 056 007
- DE-A1-102011 077 904
- DE-A1-102011 082 028
- DE-A1-102011 121 566
- US-A1- 2005 161 512
- US-A1- 2009 154 813
- US-A1- 2013 223 674

## Beschreibung

Die Erfindung betrifft ein Verfahren zum Authentifizieren eines Sicherheitselements und ein Gerät zur Durchführung des Verfahrens.

Optisch variable Sicherheitselemente finden vielfach Anwendung, um Dokumente, Banknoten oder Produkte zu authentifizieren und vor Fälschung zu schützen. Da diese Sicherheitselemente bei unterschiedlichen Betrachtungs- und/oder Beleuchtungswinkeln unterschiedliche optische Effekte erzeugen, können sie nicht einfach durch Photokopieren, Duplizieren oder Simulieren nachgestellt werden.

Üblicherweise besitzen solche Sicherheitselemente ein definiertes optisches Design, welches durch einfaches Betrachten visuell verifiziert werden kann. Fälschungen von hoher Qualität, die nur in wenigen Details vom Original abweichen, können jedoch bei einer visuellen Inspektion nicht immer zuverlässig erkannt werden. Auch wenn eine Vielzahl von Dokumenten oder Produkten authentifiziert werden muss, beispielsweise eine große Menge von Objekten wie Banknoten, Dokumenten oder Produkten, ist eine visuelle Inspektion nicht zweckmäßig. Eine visuelle Inspektion ist oftmals auch nicht ausreichend, weil oftmals dem Benutzer nicht bekannt ist, welches konkrete Sicherheitselement mit welchen optischen und anderen Sicherheitsfunktionen überhaupt dem jeweiligen Objekt zugeordnet ist. Aufgrund der Vielzahl existierender Sicherheitselemente auf allen möglichen unterschiedlichen Objekten ist es oftmals schwierig, jeweils genaue Kenntnis über das konkret vorliegende Sicherheitselement und dessen spezifische Eigenschaften aus der Erinnerung abzurufen.

Es sind ferner Systeme zur automatischen Authentifizierung von Sicherheitselementen bekannt. Hierfür wird das Sicherheitselement üblicherweise in einem vorgegebenen Winkel mit einem Laser beleuchtet und das gebeugte Licht in einem oder mehreren vorgegebenen Betrachtungswinkeln mittels geeigneter Sensoren erfasst. Es handelt sich hierbei um stationäre Anlagen, die sich zur Überprüfung einer großen Menge von insbesondere identischen Objekten in kurzer Zeit eignen.

Es besteht jedoch auch oft der Bedarf, die Sicherheitselemente einzelner Objekte spontan vor Ort zu authentifizieren. Hierfür sind solche stationären Anlagen nicht geeignet.

Es ist somit Aufgabe der vorliegenden Erfindung, die Authentifizierung von Sicherheitselementen zu verbessern.

Diese Aufgabe wird durch ein Verfahren mit den Merkmalen des Patentanspruchs 1 und durch ein Gerät mit den Merkmalen des Patentanspruchs 10 gelöst.

Bei einem solchen Verfahren zum Authentifizieren eines optisch variablen Sicherheitselements, insbesondere eines diffraktiven Sicherheitselements, werden die folgenden Schritte durchgeführt:
a) Aufnehmen einer Bildfolge mit mindestens einem Einzelbild des Sicherheitselements mittels eines Sensors insbesondere eines Handgeräts, vorzugsweise eines Smartphones, Tablets oder eines PDAs, oder eines "Augmented Reality Device" wie z.B. "Google Glass";
b) Überprüfen, ob zumindest eine vorgegebene optische Information in zumindest einem Einzelbild der Bildfolge vorliegt.

Zur Durchführung eines solchen Verfahrens eignet sich insbesondere ein optisch variables Sicherheitselement, welches zumindest eine vorgegebene optische Information umfasst, die mit einem Sensor eines Handgeräts, insbesondere eines Smartphones oder PDAs, oder "Augmented Reality Device" maschinell erfassbar ist. Dies ermöglicht es, die Authentizität eines Sicherheitselements unabhängig von fest installierten Geräten jederzeit und an jedem Ort zuverlässiger zu überprüfen, als dies mit einer einfachen visuellen Inspektion möglich wäre. Mit einem solchen Sicherheitselement geschützte und durch ein solches Verfahren authentifizierte Dokumente oder Produkte sind somit besonders gut vor Nachahmung geschützt.

Unter Authentifizierung wird dabei die Erkennung eines originalen Sicherheitselements und dessen Unterscheidung von einer Fälschung verstanden.

Optisch variable Sicherheitselemente sind auch als optical variable devices (OVD) bekannt. Es handelt sich um Elemente, die bei unterschiedlichen Betrachtungs- oder Beleuchtungsbedingungen unterschiedliche optische Effekte zeigen. Ein optisch variables Sicherheitselement weist vorzugsweise eine optisch aktive Reliefstruktur, beispielsweise eine diffraktive Reliefstruktur, insbesondere ein Hologramm oder ein Kinegram^{®}, eine Beugungsstruktur Nullter Ordnung, eine Makrostruktur, insbesondere ein refraktiv wirkendes Mikrolinsenfeld oder ein Mikroprismenfeld, eine Mattstruktur, insbesondere eine isotrope Mattstruktur oder eine anisotrope Mattstruktur, lineare oder gekreuzte Sinusgitterstrukturen oder Binärgitterstrukturen, asymmetrische Blaze-Gitterstrukturen, eine Überlagerung einer Makrostruktur mit einer diffraktiven und/oder Matt-Mikrostruktur, ein Interferenzschichtsystem, welches vorzugsweise einen blickwinkelabhängigen Farbverschiebungseffekt generiert, eine Schicht enthaltend Flüssigkristalle, insbesondere cholesterische Flüssigkristalle und/oder eine Schicht enthaltend optisch variable Pigmente, beispielsweise Dünnfilmschichtpigmente oder Flüssigkristallpigmente auf. Insbesondere durch Kombinationen von ein oder mehreren der vorgenannten Elemente kann ein besonders fälschungssicheres OVD bereitgestellt werden, weil ein Fälscher diese spezifische Kombination nachstellen muss, was den technischen Schwierigkeitsgrad der Fälschung beträchtlich erhöht.

Unter einem Handgerät soll dabei jegliches transportable Gerät verstanden werden, welches von einem Benutzer während der Durchführung des Verfahrens gehalten oder von einem Benutzer getragen und manuell manipuliert werden kann. Neben den bereits erwähnten Smartphones, Tablets oder PDAs können selbstverständlich auch andere Geräte verwendet werden. Beispielsweise ist es möglich, anstelle der genannten Vielzweckgeräte auch Geräte zu verwenden, die spezifisch nur für die Durchführung dieses Verfahrens konstruiert sind. Beispielsweise kann ein vorhandener Dokumentenscanner durch Anpassung seiner Software und/oder Hardware an die Durchführung des erfindungsgemäßen Verfahrens angepasst werden.

Der verwendete Sensor ist in der Regel ein digitaler elektronischer Sensor, beispielsweise ein CCD-Sensor (CCD = charge coupled device). Bevorzugt werden dabei CCD-Arrays eingesetzt, also CCD-Anordnungen, bei denen einzelne CCDs in einer zweidimensionalen Matrix angeordnet sind. Die von einem solchen Sensor erzeugten Einzelbilder liegen dann in Form einer Pixelmatrix vor, wobei jedes Pixel mit einem einzelnen CCD des Sensors korrespondiert. Bevorzugt weist der CCD-Sensor jeweils separate Sensoren für die Farben Rot, Grün und Blau (RGB) auf, wodurch diese Einzelfarben oder Mischfarben daraus besonders einfach zu detektieren sind.

Für viele Anwendungsfälle ist es bevorzugt, ein OVD bereitzustellen, welches mit einer Vielzahl von verfügbaren Handgeräten überprüfbar ist. Durch die stürmische technische Weiterentwicklung gibt es jedoch starke technische Unterschiede zwischen einzelnen Handgeräten, insbesondere bei Rechenleistung, optischer Abbildungsqualität des Sensors (z.B. optische Auflösung). Daher ist es in manchen Fällen unumgänglich, aus der Vielzahl der Handgeräte eine Unterauswahl zu definieren, mit denen das erfindungsgemäße Verfahren durchführbar ist.

Vorzugsweise umfasst die Bildfolge eine Vielzahl von Einzelbildern des Sicherheitselements, insbesondere mehr als 2 Einzelbilder des Sicherheitselements umfasst. Ferner ist bevorzugt, wenn jedes Einzelbild mehr als 480 x 320 Pixel, insbesondere mehr als 1920 x 1280Pixel, aufweist.

Die Bildfolge kann dabei eine Mehrzahl von diskret erstellten Einzelbildern sein, die in keinem zeitlichen Zusammenhang stehen, es kann sich aber auch um einen Film handeln, also aus Einzelbildern bestehen, die in einem vorgegebenen zeitlichen Abstand, insbesondere mit einer Aufnahmefrequenz von 5 bis 60 Bildern pro Sekunde, aufgenommen sind.

Erfindungsgemäß wird in Schritt b) anhand zumindest zweier Einzelbilder der Bildfolge überprüft, ob das Sicherheitselement eine optisch variable Struktur umfasst. Dies ermöglicht es, ein authentisches Sicherheitselement von einer Kopie (z.B. einer Farbkopie) zu unterscheiden, die lediglich eine statische - also nicht optisch variable - Repräsentation der zumindest einen vorgegebenen optischen Information aufweist. Hierbei ist es vorteilhaft, die Zugehörigkeit des jeweiligen Einzelbilds explizit zu überprüfen oder einen vorgegebenen zeitlichen Abstand zwischen zwei Einzelbilder als Bedingung zu definieren, damit ein Anwender nicht zwei separate Einzelbilder als Täuschung verwenden kann, um eine optische Variabilität vorzutäuschen.

Erfindungsgemäß wird in Schritt b) zunächst überprüft, ob ein vorgegebenes Objekt in zumindest einem Einzelbild der Bildfolge vorliegt. Dieses Objekt kann dabei das gesamte Design des Sicherheitselements selbst sein oder lediglich einen Teilaspekt davon darstellen. Hierdurch wird sichergestellt, dass das zumindest eine Einzelbild überhaupt das zu authentifizierende Sicherheitselement darstellt. Ist dies nicht der Fall, kann auf weitere Untersuchungen verzichtet werden und der Benutzer darauf hingewiesen werden, dass die mittels des Sensors aufgenommenen Bilder zum Zweck der Authentifizierung ungeeignet sind und gegebenenfalls neu aufgenommen werden müssen.

Alternativ dazu kann der Benutzer aufgefordert werden, andere Schritte zur Identifikation oder Authentifikation durchzuführen. Beispielsweise kann der Benutzer aufgefordert werden, ein Bild eines auf dem Objekt vorhandenen (z.B. gedruckten) Barcode oder anderen maschinenlesbaren Bereich (z.B. die MRZ (MRZ = machine readable zone) eines ID-Dokuments) oder einen bestimmten Teilbereich der Verpackung oder eines Dokuments aufzunehmen und für weitere Analysen an eine amtliche oder kommerziellen Prüfungsstelle zu senden. Diese zusätzlich aufgenommenen Bilder können dann mit weiteren Informationen verknüpft werden und gegebenenfalls anhand dessen dem Benutzer noch weitere Instruktionen zur Identifikation oder Authentifikation, z.B. über eine Internetverbindung übermittelt werden.

Es ist dabei zweckmäßig, wenn zum Überprüfen, ob das vorgegebene Objekt vorliegt, ein Bilderkennungsalgorithmus, insbesondere ein Haar-Cascade-Algorithmus, verwendet wird. Solche Algorithmen erlauben eine schnelle und zuverlässige Klassifizierung von Bildinhalten.

Der Haar-Cascade-Algorithmus beruht auf der Auswertung einer Vielzahl sogenannter "Haar-like" features in dem Einzelbild. Hierbei handelt es sich um Strukturen, die mit Haar-Wavelets, also Rechteckwellenzüge einer vorgegebenen Wellenlänge, verwandt sind. In zwei Dimensionen handelt es sich dabei einfach um benachbarte, alternierend helle und dunkle Rechteckbereich im Bild. Durch Verschieben einer Rechteckmaske über das Einzelbild werden die vorliegenden "Haar-like" features ermittelt. Die vorliegenden "Haar-like" features werden dann mit denjenigen verglichen, die im zu erkennenden Objekt vorliegen sollen. Dies kann durch eine Filterkaskade erfolgen.

Der Haar-Cascade-Algorithmus hat den Vorteil, besonders wenig Rechenzeit und Computerresourcen zu benötigen. Es ist jedoch auch möglich, andere Bilderkennungsalgorithmen zu verwenden.

Zum Überprüfen, ob das vorgegebene Objekt vorliegt, wird bevorzugt mittels des Bilderkennungsalgorithmus ein Vergleich des zumindest einen Einzelbilds mit einem vorher aufgenommenen Trainingsdatensatz durchgeführt wird. Dies kann im Rahmen des beschriebenen Haar-Cascade-Algorithmus, aber auch mittels anderer Algorithmen erfolgen.

Die Bilderkennung beruht also in vorteilhafter Weise auf einer Form des Computerlernens. Dem Algorithmus werden keine konkreten Parameter vorgegeben, anhand welcher eine Klassifizierung des Bildinhalts erfolgt, vielmehr lernt der Algorithmus diese Parameter anhand des Trainingsdatensatzes.

Bevorzugt werden dabei zum Aufnehmen des Trainingsdatensatzes eine Mehrzahl von Bildern erstellt, wobei eine erste Teilmenge der Bilder jeweils das vorgegebene Objekt aufweist und eine zweite Teilmenge der Bilder jeweils das vorgegebene Objekt nicht aufweist, und wobei jedem Bild der ersten Teilmenge alle jeweiligen Bildkoordinaten der zu erkennenden Merkmale des vorgegebenen Objekts zugeordnet werden.

Anhand der ersten und zweiten Teilmenge sowie der zugeordneten Bildkoordinaten wird dann bevorzugt ein Training des Bilderkennungsalgorithmus durchgeführt. Hierdurch lernt der Algorithmus, die Bilder korrekt zu klassifizieren und gegebenenfalls bewusst in den Trainingsdatensatz eingebrachte Störfaktoren, wie beispielsweise Reflektionen in den Bildern, zufälligen Schattenfall oder dergleichen zu ignorieren. Hierdurch wird eine schnelle und zuverlässige Bilderkennung ermöglicht.

Es ist erfindungsgemäß, dass beim Überprüfen, ob die zumindest eine vorgegebene optische Information des optisch variablen Sicherheitselements vorliegt, aus zumindest einem Einzelbild der Bildfolge die Kontur des vorgegebenen Objekts ermittelt wird.

Gegenüber der oben beschriebenen einfachen Bilderkennung, die lediglich eine Ja/Nein-Klassifizierung oder eine Wahrscheinlichkeitsaussage liefert, ob das vorgegebene Objekt in dem Einzelbild vorhanden ist, werden so zusätzliche Informationen bereitgestellt. Insbesondere kann anhand der ermittelten Kontur das Vorliegen oder Nichtvorliegen von detaillierten Merkmalen des Objekts überprüft werden. Dies liefert weitere Informationen, die zur Authentifizierung des Sicherheitselements beitragen können.

Die vorgegebene Information, die zur Authentifizierung dient, kann also lediglich ein Detail des gesamten Objekts betreffen. Dies ermöglicht es, auch visuell erkennbare Sicherheitsmerkmale gleichsam im Design des Sicherheitselements zu verbergen. Vorzugsweise wird zum Ermitteln der Kontur ein Kantenerkennungsalgorithmus, insbesondere ein Canny-Algorithmus, ausgeführt. Der Canny-Algorithmus ist ein besonders robuster Algorithmus zur Kantendetektion und liefert schnelle und zuverlässige Ergebnisse.

Zur Anwendung des Canny-Algorithmus auf Farbbilder müssen diese zunächst in Graustufen überführt werden. In Graustufenbildern zeichnen sich Kanten durch starke Helligkeitsschwankungen, d.h. einen starken Kontrast, zwischen benachbarten Pixeln aus und können somit als Unstetigkeiten der Grauwertfunktion des Bildes beschrieben werden.

Da solche Unstetigkeiten auch durch Bildrauschen verursacht werden können, ist es zweckmäßig, wenn bei der Ausführung des Kantenerkennungsalgorithmus eine Rauschfilterung, insbesondere mittels eines Gaußfilters mit einer bevorzugten Kernel-Größe von 3 bis 7, durchgeführt wird.

Unter Kernel wird hierbei eine Konvolutionsmatrix verstanden, die auf die Bildinformation angewendet wird. Die Konvolutionsmatrix des Gaußfilters entspricht der Normalverteilung und wirkt als Tiefpassfilter. Der Grauwert eines gefilterten Pixels entspricht also dem mit der Normalverteilung gewichtetem Mittelwert der Grauwerte der umgebenden Pixel bis zu einer maximalen, von der Kernelgröße definierten Entfernung. Kleinere, durch Rauschen entstehende Strukturen gehen verloren, während die Hauptstrukturen des abgebildeten Objekts erhalten bleiben.

Vorzugsweise wird bei der Ausführung des Kantenerkennungsalgorithmus eine Kantendetektion durch die Anwendung eines Sobel-Operators in zumindest einer Vorzugsrichtung des zumindest einen Einzelbilds, vorzugsweise in zwei orthogonalen Vorzugsrichtungen des zumindest einen Einzelbilds, durchgeführt.

Der Sobel-Operator ist ebenfalls ein Faltungsoperator, der als diskreter Differenzierer wirkt. Durch die Faltung des Bildes mit dem Sobel-Operators erhält man die partiellen Ableitungen der Grauwertfunktion in den zwei orthogonalen Vorzugsrichtungen. Hieraus kann dann die Kantenrichtung und Kantenstärke bestimmt werden.

Es ist weiter bevorzugt, wenn bei der Ausführung des Kantenerkennungsalgorithmus eine Kantenfilterung durchgeführt wird. Dies kann beispielsweise mittels einer sogenannten "non-maximum suppression" erfolgen, die sicherstellt, dass nur die Maxima entlang einer Kante erhalten bleiben, so dass eine Kante senkrecht zu ihrer Erstreckungsrichtung nicht breiter als ein Pixel ist.

Vorzugsweise wird ferner bei der Ausführung des Kantenerkennungsalgorithmus eine schwellenwertbasierte Ermittelung der Bildkoordinaten der Kontur des Objekts durchgeführt. Es wird also ermittelt, ab welcher Kantenstärke ein Pixel zu einer Kante zu zählen ist.

Hierzu kann beispielsweise ein Hysterese-basiertes Verfahren angewendet werden. Man legt hierzu zwei Schwellenwerte T₁ und T₂ fest, wobei T₂ größer ist als T₁. Ein Pixel mit einer Kantenstärke größer T₂ wird als Bestandteil einer Kante betrachtet. Alle mit diesem Pixel verbundenen Pixel mit einer Kantenstärke größer als T₁ werden ebenfalls dieser Kante zugerechnet.

Man erhält somit die Bildkoordinaten aller einer Kante des Objekts zugehörigen Pixel in dem untersuchten Einzelbild. Diese können weiter analysiert werden, beispielsweise um einfache geometrische Formen zu erkennen.

Es ist ferner zweckmäßig, wenn auf Grundlage der ermittelten Bildkoordinaten der Kontur zumindest ein Einzelbild der Bildfolge in zwei oder mehr Teilbereiche unterteilt wird und für jeden Teilbereich die ermittelten Bildkoordinaten der Kontur mit korrespondierenden Sollkoordinaten verglichen werden und hieraus insbesondere das Vorhandensein und/oder die Größe und/oder die Relativlage vorgegebener Konturen ermittelt wird. Hier kann es vorteilhaft sein, die Unterteilung in Teilbereiche bzw. die Begrenzungen der Teilbereiche an das konkret vorliegende Design des Sicherheitselementes anzupassen und somit speziell interessante Teilbereiche des Designs isoliert zu analysieren.

Diese vorgegebenen Konturen können mit der vorgegebenen optischen Information korrespondieren, so dass eine genaue Überprüfung des Einzelbildes auf Übereinstimmung mit der optischen Information des echten Sicherheitselements möglich wird.

Um ein so untersuchtes Sicherheitselement als echt zu authentifizieren, muss dabei nicht zwingend eine absolute Übereinstimmung vorliegen, es ist auch möglich, Toleranzbereiche für erlaubte Abweichungen vorzugeben. Abweichungen müssen nicht unbedingt auf eine Fälschung hindeuten, da auch optische Artefakte, perspektivische Verzerrungen, Abnutzung oder Verschmutzung des Sicherheitselements im Gebrauch oder ähnliche Effekte, die bei der Aufnahme des Einzelbildes auftreten können, die Übereinstimmung mit dem Referenzbild des Originals beeinträchtigen können. Um solche Abweichungen zu verringern, ist es vorteilhaft, wenn Hilfsmittel vorgesehen sind, um dem Benutzer die Durchführung des erfindungsgemäßen Verfahrens zu erleichtern. Beispielsweise kann auf dem Bildschirm des Handgeräts ein oder mehrere Orientierungs-Rahmen abgebildet sein, in welchen das Sicherheitselement oder Teile des Motivs für die Erkennung platziert werden sollte. Alternativ oder ergänzend dazu können weitere optische Hilfsmittel oder Anzeigen vorgesehen sein, um beispielsweise perspektivische Verzerrungen und/oder Verdrehungen zu verringern. Beispielsweise können das bewegliche Fadenkreuze oder andere Elemente sein, die mittels Bewegung des Handgeräts zueinander positioniert werden sollen. Dies erschwert zwar die Bedienung des Handgeräts für den Benutzer, kann aber die Erkennungsrate für das Sicherheitselement verbessern.

Es ist erfindungsgemäß, dass zumindest ein Teilbereich des Einzelbildes, welcher in einer vorgegebenen Lageposition zu der Kontur eines vorgegebenen Objektes positioniert ist, und welche zumindest ein Pixel und/oder zumindest eine Pixelgruppe des Einzelbildes umfasst, ausgewählt wird und zumindest eine Eigenschaft des zumindest einen Pixels und/oder der zumindest einen Pixelgruppe des zumindest einen ausgewählten Teilbereichs mit einem korrespondierenden Sollwert verglichen wird.

Die vorgegebene optische Information oder auch Teile davon können also auch auf Pixelebene analysiert werden. Dies ermöglicht es, sehr feine Details des Designs des Sicherheitselements zu dessen Authentifizierung zu verwenden. Beispielsweise können bereits gezielte Farb- oder Helligkeitsabweichungen in sehr kleinen Bereichen des Sicherheitselements, die sich beim Aufnehmen der Bildfolge lediglich als einzelne Pixel abbilden, zur Authentifizierung genutzt werden. Dabei kann dieser sehr kleine Bereich besonders unauffällig gestaltet sein, damit der potentielle Fälscher keine Kenntnis über die besondere Bedeutung dieses kleinen Bereichs hat.

Es ist dabei zweckmäßig, wenn die Lageposition des zumindest einen Teilbereichs des Einzelbildes anhand der ermittelten Bildkoordinaten der Kontur bestimmt wird. Auf diese Weise können kleine Details des Sicherheitselements sicher anhand ihrer Relativlage zu der Kontur aufgefunden und untersucht werden.

Der zumindest eine Teilbereich umfasst dabei vorzugsweise weniger als 50% der Fläche des Einzelbildes.

Es ist weiter vorteilhaft, wenn während des Aufnehmens der Bildfolge in Schritt a) ein Winkel zwischen dem Sensor und dem Sicherheitselement und/oder ein Winkel zwischen einer Lichtquelle (z.B. der Blitzleuchte des Handgeräts) und dem Sicherheitselement verändert wird. Unter dem Winkel zwischen einer Lichtquelle und dem Sicherheitselement ist der Einfallswinkel des Lichts zu verstehen, der das OVD beleuchtet, zur Flächennormalen des OVD. Wenn die Lichtquelle des Handgeräts benutzt wird, ist der Einfallswinkel des Lichts relativ genau übereinstimmend mit der optischen Achse des Sensors (vom OVD durch dessen Linse zum Bildsensor laufend).

Da es sich um ein optisch variables Sicherheitselement handelt, verändert sich bei der Veränderung des Betrachtungswinkels und/oder Beleuchtungswinkels auch dessen erfassbare/messbare Erscheinungsbild. Auf diese Weise kann zunächst verifiziert werden, ob das in der Bildfolge erfasste Sicherheitselement tatsächlich optisch variabel ist, oder ob es sich um eine statische Kopie eines OVD handelt.

Ferner wird so ermöglicht, die vorgegebene optische Information mit der optischen Variabilität zu verknüpfen. Beispielsweise kann ein Teil der vorgegebenen optischen Information bei einem ersten Betrachtungswinkel und ein anderer Teil der vorgegebenen optischen Information bei einem zweiten Betrachtungswinkel sichtbar werden. Eine statische Kopie eines solchen Sicherheitselements würde niemals die vollständige Information zeigen, so dass das Sicherheitselement konventionell, insbesondere drucktechnisch nicht kopierbar ist.

Es ist weiter vorteilhaft, wenn während des Aufnehmens der Bildfolge in Schritt a) mittels eines Lagesensors des Handgeräts zu jedem Einzelbild der Bildfolge eine Relativlage des Handgeräts zu einer vorgegebenen Position registriert und dem jeweiligen Einzelbild zugeordnet wird.

Zumindest wenn die Relativlage des Sicherheitselements zu der vorgegebenen Position bekannt ist, kann so der Betrachtungswinkel genau bestimmt werden. Dies ist beispielsweise möglich, wenn das Sicherheitselement während der Aufnahme der Bildfolge auf einer ebenen, insbesondere waagerechten Oberfläche abgelegt wird.

Übliche Lagesensoren oder Bewegungssensoren von Smartphones oder dergleichen können dann problemlos die relative Orientierung des Smartphones zu dieser Oberfläche und damit dem Sicherheitselement während der Aufnahme der Bildfolge bestimmen. Die Genauigkeit üblicher Lagesensoren oder Bewegungssensoren bewegt sich insbesondere in einem Bereich von +/- 1° mit vorheriger Kalibrierung des betreffenden Sensors und insbesondere in einem Bereich von +/- 5° ohne vorherige Kalibrierung des betreffenden Sensors. Dabei ist zu beachten, dass solche üblichen Lagesensoren oder Bewegungssensoren lediglich ihre relative Lage zu einer Waagerechten oder Senkrechten erfassen können, jedoch nicht ihre Relativlage zu dem Sicherheitselement. Der Benutzer sollte also bevorzugt angewiesen werden, das Sicherheitselement in eine möglichst genau waagerechte oder senkrechte Position zu bringen, um eine möglichst genaue Erkennung zu ermöglichen.

Zum Überprüfen, ob das Sicherheitselement eine optisch variable Struktur umfasst, werden vorzugsweise in Schritt b) zwei Einzelbilder der Bildfolge verglichen, die mit unterschiedlichem Betrachtungs- und/oder Beleuchtungswinkel und/oder Beleuchtungsbedingungen aufgenommen wurden.

Unterscheiden sich diese Einzelbilder um ein vorbestimmtes Maß in einem oder mehrerer Parameter, so kann vom Vorliegen einer optisch variablen Struktur ausgegangen werden. Ist dies nicht der Fall, so liegt höchstwahrscheinlich eine statische Kopie vor.

Es ist dabei vorteilhaft, wenn zum Überprüfen, ob das Sicherheitselement eine optisch variable Struktur umfasst, jeweils korrespondierende Pixel und/oder Pixelgruppen, insbesondere der Teilbereiche, der Einzelbilder verglichen werden.

Auf diese Weise kann ohne großen Verarbeitungsaufwand die Identität oder Nichtidentität der Einzelbilder festgestellt werden.

Es ist zweckmäßig, wenn hierbei überprüft wird, ob sich die jeweiligen Pixel und/oder Pixelgruppen, insbesondere der Teilbereiche, der Einzelbilder in einem Farbwert und/oder Helligkeitswert unterscheiden.

Für die Überprüfung auf Identität der Einzelbilder müssen also keinerlei Strukturen in den Einzelbildern erkannt werden, es genügt, OVD-typische Veränderungen aufgrund des geänderten Betrachtungs- oder Beleuchtungswinkels auf Pixelebene zu betrachten. Dies ist besonders effizient und spart Rechenzeit. Dabei können dem Benutzer bevorzugt Anweisungen übermittelt werden, wie der Benutzer den Betrachtungs- oder Beleuchtungswinkel ändern soll, um spezifische optisch variable Veränderungen, insbesondere durch Verkippung und/oder Verdrehung hervorzurufen.

Vorzugsweise umfasst die vorgegebene optische Information ein oder mehrere Informationen ausgewählt aus der Gruppe: Objekt, Kontur des Objekts, Teil der Kontur des Objekts, Eigenschaften der Pixel und/oder Pixelgruppe des zumindest einen ausgewählten Teilbereichs.

Die vorgegebene optische Information kann also auf vielfältige Weise in das Design des Sicherheitselements integriert werden. Insbesondere können die genannten Optionen auch kombiniert werden. Dies ermöglicht es zum Beispiel, eine optische Information darzustellen, die zwar visuell sichtbar sein kann, aber so im Gesamtdesign versteckt oder verteilt ist, dass sie nicht als eigene Information wahrgenommen wird. Es ist damit für einen Fälscher schwer zu erkennen, was genau eigentlich zur Authentifizierung des Sicherheitselements verwendet wird, so dass Fälschungen besonders schwierig herzustellen sind.

Für die Authentifizierung des Sicherheitselements ist es dabei insbesondere zweckmäßig, wenn eine oder mehrere Informationen ausgewählt aus der Gruppe: Objekt, Kontur des Objekts, Teil der Kontur des Objekts, Eigenschaften der Pixel und/oder Pixelgruppe des zumindest einen ausgewählten Teilbereichs, mit Sollwerten verglichen werden, um zu ermitteln, ob die vorgegebene optische Information vorliegt.

Auch hier können wieder Toleranzen zu den Sollwerten erlaubt werden, um Abweichungen aufgrund photographischer Artefakte und dergleichen zuzulassen. Derartige Toleranzen sind vorteilhaft, weil OVDs generell sensibel auf geringe Unterschiede in den Betrachtungs- und Beleuchtungsbedingungen reagieren.

Es ist weiter vorteilhaft, wenn während des Aufnehmens der Bildfolge in Schritt a) mindestens ein Bild der Bildfolge mit Blitz und mindestens ein Bild der Bildfolge ohne Blitz aufgenommen wird.

Es ist vorteilhaft, wenn die zumindest eine vorgegebene optische Information eine visuell erkennbare Information ist oder umfasst.

Dies erlaubt es, neben der geschilderten maschinellen Authentifizierung auch eine visuelle Inspektion durchzuführen, sollte gerade keine Möglichkeit zur maschinellen Überprüfung bestehen. Unter visuell erkennbar soll dabei verstanden werden, dass die Information bei einem üblichen Betrachtungsabstand von etwa 30 cm, bevorzugt von 10 cm bis 50 cm, und bei einer üblichen Beleuchtungsstärke von 1000 lx, bevorzugt von 10 lx bis 100000 lx vom menschlichen Auge aufgelöst werden kann.

Es ist dabei möglich, dass die zumindest eine vorgegebene optische Information ein Symbol, Logo, Bild, Zeichen, alphanumerischer Charakter oder eine Zahl ist oder umfasst.

Die genannten Strukturen können auch in weitere Designs integriert sein und sind besonders einfach zu erkennen und auch visuell zu verifizieren.

Es ist ferner möglich und vorteilhaft, dass die zumindest eine vorgegebene optische Information ein Teilelement eines Symbols, Logos, Bilds, Zeichens, alphanumerischen Charakters oder einer Zahl ist oder umfasst.

Die vorgegebene optische Information kann auf diese Weise besonders subtil und unauffällig in ein Design integriert sein. Beispielsweise kann ein alphanumerischer Charakter eine geringfügige Veränderung oder Abweichung gegenüber dem bei anderen Charakteren verwendeten Schriftsatz haben. Auf diese Weise lässt sich die optische Information verbergen, so dass nicht unmittelbar ersichtlich ist, welcher Teil des Sicherheitselements als Authentifizierungsmerkmal benutzt wird. Beispielsweise kann ein Text in der Serifen-Schriftart "Times Roman" in 18 Punkt gesetzt sein mit Ausnahme eines einzigen Buchstabens, dessen einer Serif etwas kürzer ist als vorgegeben oder dessen einer Serif ganz fehlt.

Zu diesem Zweck ist es insbesondere vorteilhaft, wenn die zumindest eine vorgegebene optische Information neben einer weiteren optischen, visuell wahrnehmbaren Information des diffraktiven Sicherheitselements, insbesondere in Form eines Symbols, Logos, Bilds, Zeichens, alphanumerischen Charakters oder einer Zahl, vorliegt.

Es ist ferner möglich, dass die zumindest eine vorgegebene optische Information eine Pixelanordnung und/oder Linienanordnung und/oder die Relativlage einer Pixelanordnung und/oder Linienanordnung zu einer weiteren optischen, visuell wahrnehmbaren Information des diffraktiven Sicherheitselements, insbesondere in Form eines Symbols, Logos, Bilds, Zeichens, alphanumerischen Charakters oder einer Zahl, ist oder umfasst.

Auch so kann die optische Information unauffällig in das Design des Sicherheitselements integriert werden.

Eine weitere Möglichkeit zur Integration der optischen Information in das Sicherheitselement besteht darin, dass die zumindest eine vorgegebene optische Information eine Abweichung einer graphischen Eigenschaft, insbesondere einer Linienstärke, eines Farbwertes, eines Tonwertes, einer Helligkeit, einer Rasterdichte, einer Rasterausrichtung oder eines Schriftsatzes, zwischen einem ersten Teilbereich und einem zweiten Teilbereich einer weiteren optischen, visuell wahrnehmbaren Information des optisch variablen Sicherheitselements, insbesondere in Form eines Symbols, Logos, Bilds, Zeichens, alphanumerischen Charakters oder einer Zahl, ist oder umfasst.

Auch auf diese Weise kann die Information im Sicherheitselement verborgen werden und somit für Fälscher schwer erkenntlich sein. Insbesondere kann eine solche Abweichung klein und lokalisiert sein, so dass ein Fälscher den Eindruck gewinnt, es handle sich dabei um einen Produktionsfehler des Sicherheitselements, den er gegebenenfalls bei der Fälschung "korrigieren" müsse. Die Fälschung weist dann natürlich die vorgegebene optische Information nicht mehr auf und ist leicht als solche zu erkennen.

Zum selben Zweck ist es auch möglich, dass die zumindest eine vorgegebene optische Information eine Abweichung von einer Symmetrie zwischen einem ersten Teilbereich und einem zweiten Teilbereich einer weiteren optischen, visuell wahrnehmbaren Information des diffraktiven Sicherheitselements, insbesondere in Form eines Symbols, Logos, Bilds, Zeichens, alphanumerischen Charakters oder einer Zahl, ist oder umfasst.

Selbstverständlich können alle genannten Möglichkeiten zur Darstellung der vorgegebenen optischen Information auch miteinander kombiniert werden.

Alternativ oder zusätzlich kann es auch vorteilhaft sein, wenn die zumindest eine vorgegebene optische Information eine visuell nicht oder nur schwer erkennbare Information ist oder umfasst, die mit dem Sensor maschinell erfassbar ist.

Unter visuell nicht erkennbar soll dabei verstanden werden, dass die Information bei einem üblichen Betrachtungsabstand von etwa 30 cm, bevorzugt von 10 bis 50 cm, und bei einer üblichen Beleuchtungsstärke von 1000 Ix, bevorzugt von 10 Ix bis 100000 lx vom menschlichen Auge nicht aufgelöst werden kann.

Insbesondere können auch visuell erkennbare und nicht erkennbare optische Informationen kombiniert werden, um so ein besonders fälschungssicheres Sicherheitselement zu erhalten. Zusätzlich zu der oben geschilderten Erkennung der visuell erkennbaren optischen Information können dann weitere Authentifizierungsschritte anhand der visuell nicht erkennbaren optischen Information durchgeführt werden. Die visuell erkennbaren optischen Informationen können mit dem unbewaffneten menschlichen Auge geprüft werden, insbesondere wenn der entsprechende Benutzer geübt bzw. trainiert ist.

Es ist dabei zweckmäßig, wenn die zumindest eine vorgegebene optische Information durch eine Variation zumindest eines Reliefparameters einer Reliefstruktur des Sicherheitselements zwischen zumindest einer ersten Zone und zumindest einer zweiten Zone des Sicherheitselements gebildet wird, wobei die in der ersten und/oder zweiten Zone vorgesehene Reliefstruktur insbesondere eine diffraktive Struktur eine lineare oder gekreuzte Sinusgitterstruktur oder Binärgitterstruktur, ein Subwellenlängengitter bzw. eine Beugungsstruktur Nullter Ordnung, ein Blaze-Gitter, eine Makrostruktur, insbesondere eine refraktiv wirkende Linsenstruktur oder Mikroprismenstruktur, eine Spiegelfläche, eine Mattstruktur, insbesondere eine anisotrope oder isotrope Mattstruktur ist. Die Reliefstruktur kann bevorzugt auch eine Kombination, insbesondere eine Überlagerung einer Makrostruktur mit einer Mikrostruktur aufweisen.

Mittels der genannten Strukturen können vielfältige optische Effekte erzeugt werden, die besonders schwer zu kopieren sind und gleichzeitig dazu beitragen, ein optisch ansprechendes Design des Sicherheitselements bereitzustellen. Geringfügige Variationen der Strukturparameter dieser Strukturen können ohne weiteres so eingebracht werden, dass sie unterhalb der Wahrnehmungsschwelle des menschlichen Auges bleiben, jedoch mittels eines Sensors detektiert werden können. Auf diese Weise kann eine optische Information in das Sicherheitselement integriert werden, ohne dass das visuell wahrnehmbare Design beeinträchtigt wird.

Es ist dabei vorteilhaft, wenn eine laterale Abmessung der zumindest einen ersten und/oder der zumindest einen zweiten Zone weniger als 600 µm, bevorzugt weniger als 300 µm beträgt, weiter bevorzugt weniger als 150 µm.

Hierdurch wird auf einfachste Weise sichergestellt, dass die unterschiedlichen Zonen nicht mit dem menschlichen Auge aufgelöst werden können und als homogene Struktur erscheinen. Insbesondere wenn der Sensor des Handgeräts eine besonders hohe optische Auflösung aufweist, kann dies dafür vorteilhaft sein.

Es ist vorteilhaft, wenn die zumindest eine erste Zone in Form eines Symbols, Logos, Bilds, Zeichens, alphanumerischen Charakters oder einer Zahl ausgebildet ist und die zumindest eine zweite Zone einen Hintergrund für die zumindest eine erste Zone ausbildet.

Hierdurch können visuell nicht erkennbare Objekte in das Design integriert werden, die mit den gleichen Methoden, die oben anhand der visuell erkennbaren optischen Information erläutert wurden, maschinell erkannt werden können. Es sind somit keine zusätzlichen Detektionsalgorithmen nötig, was die Implementierung der notwendigen Programme besonders einfach macht und zudem Speicherplatz auf dem zur Authentifizierung verwendeten Gerät spart.

Bevorzugt sind die ersten und zweiten Zonen mit einer vorgegebenen Rasterperiode ineinander gerastert.

Die Rasterperiode ist dabei bevorzugt so gewählt, dass sie mit dem menschlichen Auge nicht auflösbar ist. Bevorzugte Rasterperioden sind dabei 10 µm bis 300 µm. Dem Betrachter erscheinen die ineinander gerasterten Zonen dann als homogene Fläche, lediglich für den Sensor sind die Zonen zu unterscheiden und können somit zur Authentifizierung des Sicherheitselements herangezogen werden.

Bevorzugt ist der zumindest eine Gitterparameter eine Spatialfrequenz, ein Azimutwinkel, eine Relieftiefe, eine Reliefform, eine Phase der Reliefstruktur, eine Periode einer Azimutvariation, einer Relieftiefenvariation und/oder einer Spatialfrequenzvariation eines ein- oder zweidimensionalen Gitters, eine Mittenrauigkeit einer Mattstruktur und/oder die Vorzugsrichtung einer anisotropen Mattstruktur.

Es ist ferner zweckmäßig, wenn die Reliefstruktur des Sicherheitselements ein Gitter, insbesondere mit zirkulär, parabolisch oder schlangenlinienförmig gekrümmten Gitterlinien, mit einer periodischen Azimutvariation ist, wobei in zumindest einem der Teilbereiche die Periode der Azimutvariation und/oder die Rasterweite des ein- oder zweidimensionalen Rasters weniger als 300 µm beträgt. Beispielsweise definieren Azimutvariationen den Bereich der Betrachtungs- oder Beleuchtungsbedingungen, unter denen das OVD hell oder dunkel erscheint, wenn das OVD gekippt und/oder gedreht wird.

Aufgrund der kleinen Periode erscheinen solche Gitter für das unbewaffnete menschliche Auge als homogene Flächen. Mit dem Sensor können sie jedoch aufgelöst werden, so dass die zumindest eine vorgegebene optische Information auch hier auf Ebene der Gitterparameter codiert werden kann.

Bevorzugt deckt dabei die periodische Azimutvariation einen Bereich von +/- 30° um einen mittleren Azimutwinkel abt.

Es ist dabei vorteilhaft, wenn die Spatialfrequenz des Gitters zwischen 3000 Linien/mm und 500 Linien/mm beträgt und insbesondere zwischen 1800 Linien/mm und 300 Linien/mm, besonders bevorzugt zwischen 1400 Linien/mm und 700 Linien/mm beträgt.

Vorzugsweise ist dabei die Phase der periodischen Azimutvariation zwischen dem ersten und zweiten Teilbereich um 180° verschoben.

Diese Phasenverschiebung ist wiederum mit dem menschlichen Auge nicht zu erkennen, kann aber mittels des Sensors aufgelöst werden und somit genutzt werden, um die wenigstens eine vorgegebene optische Information in das Design des Sicherheitselements zu integrieren.

Es ist weiter vorteilhaft, wenn die Reliefstruktur des Sicherheitselements eine asymmetrische Reliefstruktur ist und im ersten Teilbereich einen Azimutwinkel aufweist, der von einem Azimutwinkel des zweiten Teilbereichs um 180° verschieden ist.

Auch eine solche Variation des Gitters ist mit dem bloßen Auge nicht zu erkennen aber mittels des Sensors auflösbar. Idealerweise handelt es sich dabei um ein asymmetrisches Gitter, welches in einem der Teilbereiche einen Azimutwinkel von 0° mit einer starken Beugung der Ordnung +1 und im anderen Teilbereich einen Azimutwinkel von 180° mit einer schwachen Beugung der Ordnung -1 aufweist. Befindet sich dabei der Sensor etwa senkrecht oberhalb des OVD, d.h. ist seine optische Achse etwa parallel zur Flächennormalen des OVD und die Beleuchtung ist in etwa seitlich, also geneigt zur Flächennormalen, dann ist der eine Teilbereich (Azimutwinkel von 0° mit einer starken Beugung der Ordnung +1) hell und der andere Teilbereich (Azimutwinkel von 180° mit einer schwachen Beugung der Ordnung -1) dunkel.

Bevorzugt weist die Reliefstruktur im ersten Teilbereich eine Spatialfrequenz auf, die sich um wenigstens 100 Linien/mm von der Spatialfrequenz des zweiten Teilbereichs unterscheidet.

Es ist ferner vorteilhaft, wenn die zumindest eine vorgegebene optische Information beim Aufnehmen der Bildfolge durch einen Moire-Effekt zwischen einem periodischen Raster des Sicherheitselements und einem periodischen Raster des Sensors erzeugt wird.

Mit anderen Worten entsteht die zumindest eine vorgegebene Information erst im Zusammenspiel zwischen einer periodischen Struktur des Sicherheitselements und einer periodischen Struktur des Sensors, beispielsweise einem periodisch angeordneten CCD-Array. Ein solches Sicherheitselement ist spezifisch für einen bestimmten Sensortyp oder zumindest eine spezifische Sensorauflösung.

Weiter ist es zweckmäßig, wenn die zumindest eine vorgegebene optische Information durch einen diffraktiven Effekt in einem Wellenlängenbereich außerhalb des sichtbaren Spektrums, insbesondere im Infrarot, erzeugt wird.

Eine derart erzeugte Information muss nicht unterhalb der Auflösungsgrenze des menschlichen Auges liegen, sondern kann auch makroskopisch sein. Insbesondere kann die vorgegebene optische Information einer weiteren, visuell wahrnehmbaren Information überlagert sein, ohne dass Design des Sicherheitselements zu beeinträchtigen.

Bevorzugt wird dabei der diffraktive Effekt durch eine diffraktive Struktur Nullter Ordnung, insbesondere ein Sinusgitter oder Binärgitter mit einer transparenten Schicht aus einem hochbrechenden Material, insbesondere aus ZnS, erzeugt. "Hochbrechend" bzw. "high refractive" bedeutet in diesem Zusammenhang, dass der Realteil des komplexen Brechungsindex vergleichsweise hoch sein soll, insbesondere zwischen 1,5 und 2,5. Solche diffraktiven Effekte mit hochbrechenden Materialien wie ZnS oder TiO₂ werden häufig in ID-Dokumentenschutzanwendungen benutzt, wo großflächige transparente Foliensysteme mit diffraktiven visuellen Effekten personalisierte Daten vor Manipulation oder Fälschung schützen (ID-Karten, Reisepässe, Führerscheinkarten, etc.).

Solche Strukturen weisen hinreichende Beugungseffekte im Infrarotbereich auf, so dass der gewünschte Effekt einfach erzeugt werden kann. Neben Zinksulfid können auch andere hochbrechende Materialien (HRI = high refractive index, HRI-Materialien), wie beispielsweise Niobpentoxid, Titandioxid o.ä. verwendet werden.

Vorzugsweise weist dabei die diffraktive Struktur Nullter Ordnung eine Gittertiefe von 50 nm bis 500 nm, insbesondere 200 nm, und/oder eine Spatialfrequenz von 500 Linien/mm bis 3000 Linien/mm, insbesondere von 1100 Linien/mm bis 2500 Linien/mm, auf.

Die Schicht aus einem hochbrechenden Material weist vorzugsweise eine Dicke von 30 nm bis 200 nm, insbesondere 100 nm, auf, und/oder weist einen Brechungsindex (Realteil) von zumindest 1,7, bevorzugt von mindestens 1,9, weiter bevorzugt von mindestens 2,1 für den sichtbaren Spektralbereich auf.

Bevorzugt weist ein von der Reliefstruktur erzeugter optischer Effekt zumindest bereichsweise eine Parallaxe in zwei zueinander orthogonalen Raumrichtungen auf.

Dies kann genutzt werden, um eine oder mehrere bevorzugte Betrachtungsrichtungen des Sicherheitselements anzuzeigen, die auch bei der Aufnahme der Bildfolge genutzt werden können. Beispielsweise kann der optische Effekt ein Kreuz oder ein Punkt sein, der sich beim Kippen des Sicherheitselements scheinbar in zwei Raumrichtungen bewegt. Die Vorzugsrichtung kann dann dadurch angezeigt werden, dass bei korrekter Ausrichtung des Sicherheitselements das Kreuz oder der Punkt in einem umgebenden Rahmen zentriert erscheint. Dieser optische Effekt ist bevorzugt diffraktiv (z.B. mittels diffraktivem Kreuzgitter und/oder einer Mattstruktur) und dient als optische Referenz für die Vorzugsrichtung.

Bevorzugt wird zum Überprüfen, ob die zumindest eine vorgegebene optische Information vorliegt, ein Filter, insbesondere ein Rasterfilter und/oder ein Farbfilter auf das zumindest eine Einzelbild der Bildfolge angewendet.

Auf diese Weise kann die zumindest eine vorgegebene optische Information auf einfache Weise aus dem Einzelbild extrahiert und verifiziert werden. Die Anwendung eines solchen Filters bedeutet keinen großen Rechenaufwand und kann daher auch auf Handgeräten mit geringer Rechenleistung durchgeführt werden.

Es ist weiter zweckmäßig, wenn die zumindest eine vorgegebene optische Information einen Code, insbesondere einen diffraktiven Barcode ausbildet.

Hierdurch können auch komplexe Informationen in das Sicherheitselement integriert werden, die die Authentifizierung besonders sicher machen. Bei der Verwendung geeigneter Techniken zur Herstellung des Sicherheitselements, beispielsweise bei der Verwendung von computergenerierten Hologrammen, können so auch Individualisierungsinformationen, wie beispielsweise Seriennummern, Barcodes oder dergleichen, in das Sicherheitselement eingebracht werden. Beispielsweise können die Individualisierungsinformationen als optisch schwebend erscheinender Effekt zu erkennen sein, wenn die Blitzleuchte des Handgeräts aktiviert wird. Der optisch schwebende Effekt soll jedoch bei diffuser Beleuchtung nicht zu sehen sein und kann eine Beziehung in seiner Bedeutung und/oder Position zum restlichen Motiv des OVD aufweisen, was die Fälschungssicherheit erhöht.

Es ist weiter bevorzugt, wenn überprüft wird, ob zumindest eine weitere optische Information in wenigstens einem Einzelbild der Bildfolge vorliegt.

Beispielsweise kann die zumindest eine weitere optische Information dabei eine Individualisierungsinformation, insbesondere eine zufällige, pseudo-zufällige und/oder algorithmisch generierte Individualisierungsinformation sein.

Hierdurch kann jedes einzelne mit einem solchen Sicherheitsmerkmal versehene Objekt individuell authentifiziert werden. Beispielsweise kann die Individualisierungsinformation mit einer Seriennummer verknüpft sein, die bei der Identifizierung und Authentifizierung in einer Datenbank abgefragt werden kann, um so zusätzliche Informationen bereitzustellen und die Sicherheit der Authentifizierung zu verbessern.

Es ist dabei zweckmäßig, wenn die Individualisierungsinformation durch einen Abstand wenigstens eines Bildelements der zumindest einen optischen Information zu zumindest einem Bildelement der zumindest einen weiteren optischen Information gebildet wird.

So kann die weitere optische Information beispielsweise nahtlos in die zumindest eine optische Information integriert werden, so dass sie mit dem bloßen Auge nicht oder nur aufwändig zu erkennen ist.

Es ist weiter zweckmäßig, wenn die Individualisierungsinformation durch einen Barcode, insbesondere einen diffraktiven Barcode gebildet wird.

Dieser diffraktive Barcode kann eine allgemeine, feststehende Information beinhalten oder eine Information, die in einer bestimmten Anzahl von Sicherheitselementen identisch ausgeführt ist, beispielsweise eine Chargennummer oder eine Produktkennziffer. Die Information kann aber auch in jedem einzelnen Sicherheitselement unterschiedlich und damit einmalig sein, beispielsweise eine individualisierte oder item-spezifische, also eine nicht wiederkehrende Information beinhalten. Diese einmalige Information kann dabei durch einen Algorithmus berechnet, pseudo-zufällig oder zufällig sein bzw. generiert werden.

Beispielsweise kann die vorgegebene optische Information einen einzelnen Barcode als 1D-Barcode oder 2D-Barcode aufweisen oder eine Gruppe aus zumindest zwei oder mehr solcher Barcodes, die gemeinsam eine wie vorher beschrieben mehrmals auftretende, oder einmalige Information ergeben bzw. die Informationen der einzelnen Barcodes sich dazu ergänzen. Die einzelnen Barcodes können dabei nebeneinander, insbesondere benachbart oder vollständig oder nur bereichsweise überlappend angeordnet sein.

Beispielsweise können die Barcodes jeweils aus einer strukturierten und damit codierten Reflexionsschicht, insbesondere einer bereichsweise entfernten Metallschicht oder auch durch eine mit einer einen diffraktiven Code darstellenden Oberflächenstrukturschicht mit diffraktiven und/oder nicht-diffraktiven Reliefstrukturen gebildet sein. Eine der Informationsebenen kann auch eine nicht optisch variable Codierung, beispielsweise in Form einer aufgedruckten Farbcodierung, z.B. einen QR-Code aufweisen. Die aufgedruckte Farbcodierung kann jedoch auch optisch variable und/oder optisch aktive Bestandteile, beispielsweise Pigmente aufweisen, die blickwinkelabhängige und/oder vom eingestrahlten Lichtspektrum abhängige Effekte zeigen, z.B. phosphoreszierend oder lumineszierend sind.

In einer bevorzugten Ausführung kann ein diffraktiver Barcode als fest vorgegebener Barcode mittels nachträglicher Modifikation so verändert werden, dass der Barcode nach der Modifikation eine individuelle Information enthält. Dazu kann beispielsweise die Reflexionsschicht des diffraktiven Barcodes lokal beispielsweise durch Laserablation so entfernt oder modifiziert werden, dass der optisch variable diffraktive Effekt im Bereich der entfernten oder modifizierten Reflexionsschicht ebenfalls ausgelöscht oder modifiziert ist. Eine andere Möglichkeit ist die lokale Überdruckung und damit lokale Abdeckung und somit Auslöschung des optisch variablen diffraktiven Effekts des diffraktiven Barcodes.

Je nach Anordnung der einzelnen Informationsebenen können die einzelnen Barcodes einzeln oder gemeinsam auslesbar sein, insbesondere unter einem gemeinsamen Blickwinkel oder Beleuchtungswinkel oder auch unter unterschiedlichen Blickwinkeln oder Beleuchtungswinkeln. Die Informationsebenen können dabei auch mit nicht optisch, sondern insbesondere elektrisch oder elektronisch auslesbaren Informationsebenen kombiniert sein, beispielsweise einer Magnetschicht mit eingeschriebener magnetischer Codierung und/oder einem Speicherchip mit eingeschriebener elektronischer Speichercodierung.

Generell kann dabei die zumindest eine weitere optische Information die zumindest eine vorgegebene optische Information überlagert. Die weitere optische Information kann dabei direkt in die zumindest eine vorgegebene optische Information integriert sein, oder beispielsweise durch eine weitere, überlagernde Schicht gebildet werden. Alternativ ist es auch möglich, die zumindest eine weitere optische Information von der zumindest einen optischen Information zu trennen, beispielsweise durch eine nicht-überlappende benachbarte Anordnung.

Es ist dabei ferner zweckmäßig, wenn die zumindest eine weitere optische Information eine oder mehrere Strukturen aus den folgenden Gruppen umfasst:
- Reliefstrukturen, insbesondere eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur,
- gedruckte Strukturen, insbesondere umfassend farbige, optisch aktive und/oder optisch variable Farbstoffe und/oder Pigmente
- magnetische Strukturen,
- partiell metallisierte Schichten und/oder partielle HRI-Schichten.

Bevorzugt ist die zumindest eine vorgegebene optische Information ein Porträt, welches in Schritt b) mittels eines biometrischen Algorithmus erkannt wird.

Biometrische Merkmale sind besonders komplex, so dass ein besonders fälschungssicheres Sicherheitselement erhalten wird. Gleichzeitig ist die zuverlässige Authentifizierung mit bekannten biometrischen Algorithmen problemlos auch im Rahmen der Rechenkapazität eines Handgeräts möglich.

Vorzugsweise werden vor und/oder während des Aufnehmens der Bildfolge in Schritt a) einem Benutzer des Handgeräts auf einem Display des Handgeräts Instruktionen angezeigt, in welcher Relativlage und/oder in welchem Abstand zu dem Sicherheitselement das Handgerät während des Aufnehmens der Bildfolge zu halten und/oder zu bewegen ist. Diese Instruktionen können auf Messdaten des Lagesensors und/oder Bewegungssensors des Handgeräts beruhen oder auch unabhängig davon sein.

Damit kann sichergestellt werden, dass auch ungeübte Benutzer eine Bildfolge aufnehmen können, die zur zuverlässigen Authentifizierung des Sicherheitselements geeignet ist. Sollte die Aufnahme einer Bildfolge keine geeigneten Einzelbilder ergeben, so können dem Benutzer auch zusätzliche Informationen angezeigt werden, die ihn beispielsweise auf einen Fehler bei der Aufnahme der Bildfolge hinweisen und ihn instruieren, wie dieser zu vermeiden ist. Dem Benutzer können auch weitere zusätzliche konkrete Informationen angezeigt werden, anhand welcher Merkmale er Fälschungen erkennen kann oder es können Informationen angezeigt werden, wo man mit hoher Wahrscheinlichkeit echte Sicherheitselemente/Objekte findet und wo man mit hoher Wahrscheinlichkeit Fälschungen findet.

Es ist weiter zweckmäßig, wenn in Schritt a) die Einzelbilder der Bildfolge mit einer Auflösung von zumindest 0,5 Linienpaaren/mm, vorzugsweise von zumindest 5 Linienpaaren/mm, weiter bevorzugt von zumindest 20 Linienpaaren/mm aufgenommen werden.

Eine solche Auflösung ist hinreichend, um eine zuverlässige Erkennung der zumindest einen vorgegebenen optischen Information zu ermöglichen und kann von gängigen Handgeräten wie Smartphones, Tablets oder PDAs problemlos erreicht werden.

Bevorzugt wird vor dem Aufnehmen der Einzelbilder in Schritt a) eine Beleuchtungsstärke gemessen und bei einer Beleuchtungsstärke von weniger als 800 lx eine Lichtquelle des Handgeräts aktiviert. Dies kann automatisch vom Handgerät oder auch manuell durch den Anwender erfolgen.

Damit wird sichergestellt, dass das Sicherheitselement hinreichend ausgeleuchtet ist, um eine zuverlässige Authentifizierung zu ermöglichen. Eine Beleuchtungsstärke von 800 lx entspricht dabei in etwa einem normal ausgeleuchteten Büroraum.

Es ist weiter vorteilhaft, wenn bei Vorliegen der zumindest einen vorgegebenen optischen Information eine Authentifizierungsbestätigung auf einer Ausgabeeinrichtung, insbesondere einem Display, ausgegeben wird.

Damit wird dem Benutzer klar mitgeteilt, ob das untersuchte Sicherheitselement authentisch ist oder nicht. Darauf aufbauend können anschließend weitere Informationen an den Benutzer übermittelt werden.

Vorzugsweise wird Schritt b) mittels eines auf einer Rechenvorrichtung des Handgeräts ausgeführtem Softwareprogramm durchgeführt.

In diesem Fall kann die Authentifizierung unmittelbar vor Ort erfolgen, ohne dass die Daten der Bildfolge von dem Handgerät auf ein weiteres Gerät übertragen werden müssen. Dies ermöglicht eine besonders flexible Durchführung des Verfahrens.

Es ist ferner vorteilhaft, wenn das Softwareprogramm und/oder eine dem Softwareprogramm zugeordnete Datenbank in vorgegebenen Abständen, insbesondere vor jeder Durchführung des Verfahrens, über eine Telekommunikationsverbindung, insbesondere Internetverbindung, aktualisiert wird.

Hierdurch können Informationen über neue oder geänderte Sicherheitselemente an das Softwareprogramm übermittelt werden und die zumindest eine vorgegebene optische Information bzw. die zu deren Überprüfung verwendeten Algorithmen entsprechend angepasst werden. Außerdem können der Software und/oder dem Benutzer so Informationen über neue bekannte Fälschungen sowie deren spezifische Besonderheiten, übermittelt werden, so dass deren Erkennung erleichtert wird.

Es ist auch möglich, dass Schritt b) mittels eines auf einer vom Handgerät verschiedenen Rechenvorrichtung ausgeführtem Softwareprogramm durchgeführt werden, an welche die in Schritt a) aufgenommene Bildfolge über eine Telekommunikationsverbindung, insbesondere Internetverbindung, übermittelt wird.

Bei einer solchen Rechenvorrichtung handelt es sich vorzugsweise um einen zentralisierten Server, der die Auswertung der Bildfolgen von einer Vielzahl von Handgeräten übernehmen kann. Der Server umfasst dabei zumindest einen Prozessor, flüchtige und nichtflüchtige Datenspeichervorrichtungen, sowie geeignete Ein- und Ausgabevorrichtungen. Das Handgerät fungiert in diesem Fall als Client in einer Client-Server-Struktur.

Da auf einem solchen Server eine deutlich größere Rechenkapazität zur Verfügung steht, als auf einem Handgerät, können so auch komplexere Bildverarbeitungsalgorithmen und Mustererkennungsalgorithmen ausgeführt werden. Zudem steht auf einem solchen Server auch mehr Speicherplatz zur Verfügung, so dass größere Datenbanken mit Merkmalen authentischer Sicherheitselemente und bekannter Fälschungen vorgehalten werden können.

Vorteilhafterweise wird bei Nichtvorhandensein der wenigstens einen optischen Information und/oder der diffraktiven Struktur in Schritt b) eine Mitteilung an die vom Handgerät verschiedene Rechenvorrichtung, welche eine Orts- und/oder Zeitinformation umfasst.

Mit anderen Worten werden aufgefundene Fälschungen von Sicherheitselementen an die Rechenvorrichtung, die vorzugsweise ein zentraler Server ist, übermittelt. Aus den Orts- und Zeitinformationen, die mit den aufgefundenen Fälschungen assoziiert sind, können dann gegebenenfalls Rückschlüsse auf den Ursprung der Fälschungen gezogen werden, was das Auffinden der Fälscher erleichtert und zusätzlich als Warninformationen an andere Benutzer übermittelt werden kann.

Bevorzugt wird in einem weiteren Schritt c) überprüft, ob zumindest eine weitere vorgegebene optische Information in zumindest einem Einzelbild der Bildfolge vorliegt, welche bei einer bekannten Fälschung des optisch variablen Sicherheitselements vorliegt und bei einem echten optisch variablen Sicherheitselement nicht vorliegt.

Es ist weiter zweckmäßig, wenn bei Nichtvorliegen der zumindest einen vorgegebenen optischen Information und bei Nichtvorliegen der zumindest einen weiteren vorgegebenen optischen Information eine Mitteilung an die vom Handgerät verschiedene Rechenvorrichtung übermittelt wird, welche eine Orts- und/oder Zeitinformation, sowie zumindest ein Einzelbild der Bildfolge umfasst.

Wenn sich also ein überprüftes Sicherheitselement als nicht authentisch herausstellt und gleichzeitig nicht als bekannte Fälschung identifiziert werden kann, so liegt eine neue Fälschung vor. Die aufgenommenen Bildinformationen des bislang nicht bekannten gefälschten Sicherheitselements werden dann an den Server übermittelt, so dass die neue Fälschung untersucht werden kann. Charakteristische Merkmale der neuen Fälschung können dann als weitere vorgegebene optische Information wieder an die Handgeräte zurück übermittelt werden, so dass die neue Fälschung besonders zuverlässig erkannt werden kann. Unterstützt werden kann dies durch eine "lernende" Software mit entsprechenden Trainingsalgorithmen. Die neu erkannten Fälschungen speisen dabei eine Datenbank, anhand derer die Software rekursiv trainiert wird und dadurch wiederum danach neu auftretende Fälschungen besser erkennen kann.

Zur Durchführung eines solchen Verfahrens eignet sich ein Gerät, insbesondere ein Handgerät mit einem Sensor zum Aufnehmen einer Bildfolge mit mindestens einem Einzelbild eines Sicherheitselements und einer Steuereinrichtung, welches so ausgestaltet ist, dass sie die folgenden Schritte ausführt:
a) Aufnehmen einer Bildfolge mit mindestens einem Einzelbild des Sicherheitselements mittels des Sensors;
b) Überprüfen, ob zumindest eine vorgegebene optische Information in zumindest einem Einzelbild der Bildfolge vorliegt.

Im Folgenden werden Ausführungsbeispiele der Erfindung exemplarisch anhand der Figuren erläutert. Es zeigen:
- Fig. 1:: Eine schematische Darstellung eines Sicherheitselements und Handgeräts bei der Authentifizierung des Sicherheitselements;
- Fig. 2:: Eine schematische Darstellung eines Sicherheitselements mit einem visuell erkennbaren Authentifizierungsmerkmal;
- Fig. 3:: Eine schematische Darstellung eines Sicherheitselements mit einem visuell nicht erkennbaren optisch variablen Authentifizierungsmerkmal;
- Fig. 4:: Eine schematische Darstellung eines alternativen Sicherheitselements mit einem visuell nicht erkennbaren optisch variablen Authentifizierungsmerkmal;
- Fig. 5:: Eine schematische Darstellung eines alternativen Sicherheitselements mit einem visuell erkennbaren Authentifizierungsmerkmal;
- Fig. 6:: Eine Detailansicht der Gitterstruktur eines Sicherheitselements mit schlangenlinienförmig gekrümmtem Gitter;
- Fig. 7:: Eine alternative Detailansicht der Gitterstruktur eines Sicherheitselements mit schlangenlinienförmig gekrümmtem Gitter;
- Fig. 8:: Eine alternative Detailansicht der Gitterstruktur eines Sicherheitselements mit schlangenlinienförmig gekrümmtem Gitter;
- Fig. 9:: Eine elektronenmikroskopische Aufnahme eines Gitters nach einer der Figuren 7 oder 8;
- Fig. 10:: Eine Detailansicht eines Sicherheitselements mit ineinander gerasterten Zonen mit unterschiedlichen Azimutwinkeln;
- Fig. 11:: Eine Detailansicht eines Sicherheitselements mit ineinander gerasterten Zonen mit unterschiedlichen Spatialfrequenzen;
- Fig. 12:: Eine schematische Darstellung eines alternativen Sicherheitselements mit einem visuell nicht erkennbaren optisch variablen Authentifizierungsmerkmal mit und ohne Rasterfilterung des aufgenommenen Bildes;
- Fig. 13:: Eine schematische Darstellung eines alternativen Sicherheitselements mit einem visuell nicht erkennbaren optisch variablen Authentifizierungsmerkmal mit ineinander gerasterten verschiedenfarbigen Zonen sowie ein zugehöriges Farbdiagramm;
- Fig. 14:: Eine schematische Darstellung eines alternativen Sicherheitselements mit Parallaxeneffekt entlang zweier orthogonaler Achsen;
- Fig. 15:: Eine schematische Darstellung eines weiteren alternativen Sicherheitselements mit Parallaxeneffekt entlang zweier orthogonaler Achsen;
- Fig. 16:: Eine Veranschaulichung des Moire-Effekts zwischen einer Rasterstruktur in einem Sicherheitselement und einem gerasterten Photosensor;
- Fig. 17:: Ein Diagramm zur Veranschaulichung der Beugungsintensität in Abhängigkeit von Wellenlänge und Gitterperiode;
- Fig. 18:: vergleichende Diagramme des Sonnenspektrums und des Spektrums eines Blitzlichts eines Smartphones; in diesem Graphen ist nur eine Kurve gezeigt.
- Fig. 19:: Ein Diagramm zur Veranschaulichung der Beugungsintensität in Abhängigkeit von Wellenlänge und Gitterperiode bei transversal elektrischer Polarisation;
- Fig. 20:: Ein Diagramm zur Veranschaulichung der Beugungsintensität in Abhängigkeit von Wellenlänge und Gitterperiode bei transversal magnetischer Polarisation;
- Fig. 21:: Eine schematische Darstellung eines Sicherheitselements mit einer anisotropen Mattstruktur;
- Fig. 22 A-C:: Eine schematische Darstellung dreier alternativer Ausführungsformen eines Sicherheitselements mit zweidimensionalem Barcode;
- Fig. 23 A-C:: Eine schematische Darstellung dreier alternativer Ausführungsformen eines Sicherheitselements mit zweidimensionalem Barcode und einem individualisierten Zufallscode;
- Fig. 24 A-C:: Eine schematische Darstellung einer Überlagerung aus einem diffraktiven Code und einer zufälligen Individualisierungsinformation;
- Fig. 25:: Eine schematische Darstellung einer Individualisierungsinformation mit zwei benachbarten, über ihre Länge hinweg variierenden diffraktiven Strukturen;
- Fig. 26:: Eine schematische Darstellung einer weiteren Überlagerung aus einem diffraktiven Code und einer zufälligen Individualisierungsinformation;
- Fig. 27:: Eine schematische Darstellung einer Überlagerung aus einem gedruckten Code und einer zufälligen Individualisierungsinformation;
- Fig. 28 A-D:: Eine schematische Darstellung einer Kombination aus einem Barcode und einem streifenförmigen diffraktiven Individualisierungscode.

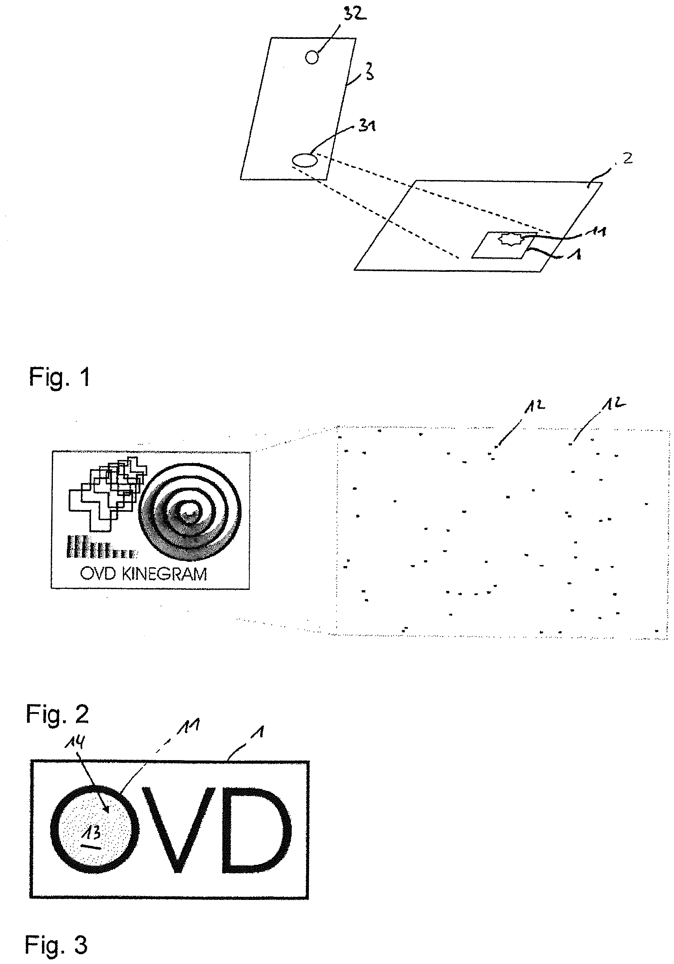

Ein Sicherheitselement 1 zum Fälschungsschutz eines Dokuments 2 weist optisch erfassbare Informationen auf, die vorzugsweise zumindest ein visuell wahrnehmbares Motiv 11 umfassen, wie Fig. 1 zeigt. Bei dem Motiv 11 kann es sich um ein Symbol, Logo, Bild, Zeichen, alphanumerischen Charakter oder eine Zahl handeln. Anstatt eines Dokuments kann es sich auch um ein kommerzielles Produkt und dessen Etikett und/oder Verpackung oder um ein Ticket oder Voucher handeln.

Vorzugsweise wird das visuell wahrnehmbare Motiv zumindest teilweise durch eine Gitterstruktur des Sicherheitselements 1 generiert. Unter einer Gitterstruktur soll dabei eine diffraktive Struktur, eine Beugungsstruktur Nullter Ordnung, ein Blaze-Gitter, eine lineare oder gekreuzte Sinusgitterstruktur oder Binärgitterstruktur, eine Makrostruktur, insbesondere eine refraktiv wirkende Linsenstruktur oder Mikroprismenstruktur, eine Spiegelfläche, eine Mattstruktur, insbesondere eine anisotrope oder isotrope Mattstruktur oder Kombinationen davon verstanden werden. Solche Gitterstrukturen sind optisch variabel, zeigen also bei unterschiedlichem Beleuchtungs- oder Betrachtungswinkel unterschiedliche optische Effekte. Das Motiv 11 kann weiter auch teilweise von nicht optisch variablen Strukturen generiert werden, beispielsweise mittels Drucken aufgebrachten Schichten, insbesondere Farbschichten. Ein anderes Beispiel einer nicht optisch variablen Struktur ist der Untergrund, auf dem das Sicherheitselement 1 aufgebracht ist, beispielsweise aus Materialien wie Papier oder Plastik, welche keinen optisch variablen Eigenschaften aufweisen.

Um eine besonders gute Fälschungssicherheit zu gewährleisten, ist es möglich, Informationen in die Gitterstruktur oder das Motiv 11 einzubringen, die nicht ohne weiteres als solche zu erkennen sind. Ein Beispiel hierfür zeigt Fig. 2. Dem visuell erkennbaren Motiv 11 ist hier eine Anordnung von gemäß einem vorgegebenen Muster verteilten Pixeln 12 überlagert. Die Überlagerung kann additiv sein, d.h. die Motiv-Struktur 11 und die Muster-Struktur 12 ergänzen sich, oder die Überlagerung ist eine XOR-Operation, d.h. die Muster-Struktur 12 ersetzt die Motiv-Struktur 11 an den Positionen der Überlappung beider Strukturen. Die Anordnung der Pixel 12 und deren Relativlage zum Motiv 11 bildet eine weitere Information, die zur Authentifizierung des Sicherheitselements 1 genutzt werden kann.

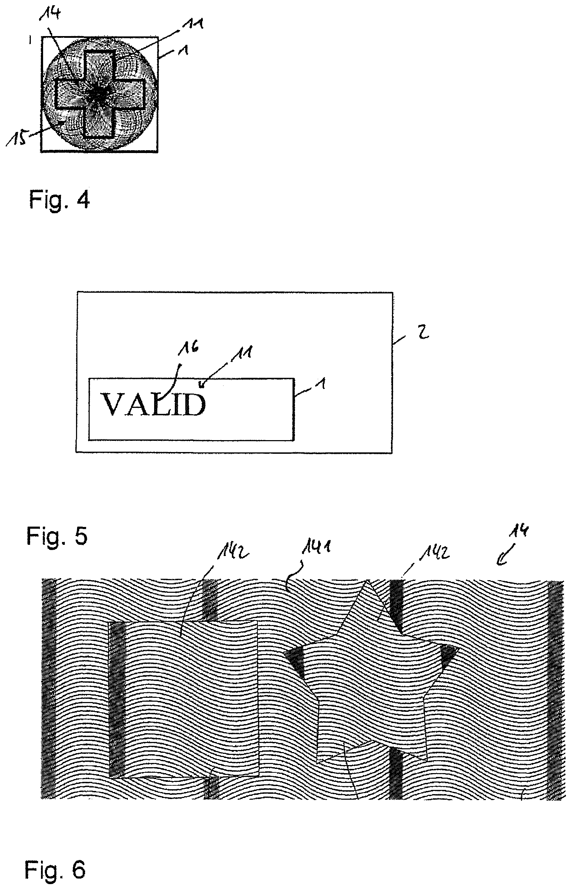

Eine weitere Möglichkeit zur Integration einer weiteren Information in das Motiv 11 zeigt Fig. 3. Hier ist eine freie Fläche 13 in dem Motiv 11 mit einer diffraktiven Struktur 14 gefüllt, die die weitere Information ausbildet. Solche diffraktiven Strukturen 14 können auch in Guillochenlinienanordnungen 15 integriert werden, wie Fig. 4 zeigt.

Visuell erkennbare Informationen können auch wie in Fig. 5 dargestellt in das Motiv 11 integriert werden. Hier ist das Motiv 11 ein Schriftzug, bei dem ein Buchstabe 16 in einem anderen Schriftsatz gesetzt ist und sich so von den anderen Buchstaben des Schriftzugs unterscheidet.

Es ist besonders vorteilhaft, wenn das Sicherheitselement 1 automatisch authentifiziert wird. Hierzu wird mit einem Bildsensor 31 eines Geräts 3 eine Bildfolge des Sicherheitselements 1 aufgenommen. Bei dem Gerät 3 handelt es sich vorzugsweise um ein Smartphone, ein Tablet, einen PDA oder ein sonstiges Handgerät mit einem Bildsensor.

Die Bildfolge umfasst mindestens zwei Einzelbilder. Bei schlechten Lichtverhältnissen, insbesondere bei einer Beleuchtungsstärke von weniger als 800 lx, also einer Beleuchtung, die dunkler ist als durchschnittliche Zimmerbeleuchtung, kann auch eine Beleuchtungsvorrichtung 32, also eine Lampe oder ein Blitz, des Geräts 3 zugeschaltet werden. Aufgrund der optischen Variabilität des optischen Erscheinungsbilds von OVDs ist es zweckmäßig, wenn man die spezifischen Eigenschaften der Beleuchtungsvorrichtung 32 des eingesetzten Geräts 3 kennt, insbesondere das Spektrum des ausgesandten Lichts und die Relativposition der Beleuchtungsvorrichtung 32 zu dem Bildsensor 31, woraus sich die Richtung des von der Beleuchtungsvorrichtung 32 auf das OVD eingestrahlte Licht zuverlässig ermitteln lässt. Dadurch kann man zumindest diese Einflussgröße auf den optischen Effekt vergleichsweise genau bestimmen.

Das Gerät 3 weist neben dem Bildsensor 31 vorzugsweise noch einen oder mehrere Prozessoren und/oder Ein- und Ausgabebaugruppen, ein auf dieser Hardwareplattform ablaufendes Betriebssystem und weitere hierauf ablaufende Softwarekomponenten, insbesondere Steuerprogramme, auf, durch deren Ablauf die Funktionen des Geräts 3 realisiert werden.

Der verwendete Sensor ist in der Regel ein digitaler elektronischer Sensor, beispielsweise ein CCD-Sensor (CCD = charge coupled device). Bevorzugt werden dabei CCD-Arrays eingesetzt, also CCD-Anordnungen, bei denen einzelne CCDs in einer zweidimensionalen Matrix angeordnet sind. Die von einem solchen Sensor erzeugten Einzelbilder liegen dann in Form einer Pixelmatrix vor, wobei jedes Pixel mit einem einzelnen CCD des Sensors korrespondiert. Bevorzugt weist ein solcher Sensor zumindest eine Auflösung von 0,5 Megapixel, besonders bevorzugt von mehr als 2 Megapixel auf. Für die daraus resultierende optische Auflösung ist die Qualität der mit dem Sensor zusammenwirkenden Linsenoptik wichtig.

Um die optische Variabilität des Sicherheitselements 1 zu erfassen, umfasst die Bildfolge eine Vielzahl von Einzelbildern des Sicherheitselements, insbesondere mehr als 2 Einzelbilder des Sicherheitselements. Die Bildfolge kann dabei eine Mehrzahl von diskret erstellten Einzelbildern sein, die in keinem zeitlichen Zusammenhang stehen, es kann sich aber auch um einen Film handeln, also aus Einzelbildern bestehen, die in einem vorgegebenen zeitlichen Abstand, insbesondere mit einer Aufnahmefrequenz von 5 bis 60 Bildern pro Sekunde, aufgenommen sind.

Vorzugsweise wird dabei während der Aufnahme der Betrachtungswinkel geändert, also das Gerät 3 relativ zum Sicherheitselement geschwenkt, so dass sich während der Aufnahme die von der Gitterstruktur des Sicherheitselements 1 gebildete optische Information aus der Blickrichtung des Geräts 3 ändert.

Vorzugsweise wird dabei dem Benutzer auf einem Display des Geräts 3 angezeigt, wie er das Smartphone relativ zu dem Sicherheitselement 1 zu bewegen hat, um eine optimal auswertbare Bildfolge zu erhalten. Während der Aufnahme der Bildfolge kann zudem mittels eines Lagesensors des Geräts 3 die Relativlage zwischen Gerät 3 und Sicherheitselement 1 gemessen werden, so dass für jedes Einzelbild der jeweilige Betrachtungswinkel bekannt ist.

Die Auswertung der so aufgenommenen Bildfolge kann direkt im Gerät 3 erfolgen. Die Bilder der Bildfolge werden dabei digital in einem Speicher des Geräts 3 abgelegt und mittels eines Prozessors des Geräts 3 verarbeitet, der eine geeignete Software ausführt.

Dabei wird zunächst überprüft, ob das Motiv 11 in zumindest einem Einzelbild der Bildfolge vorliegt. Das Motiv 11 kann dabei das gesamte Design des Sicherheitselements selbst sein oder lediglich einen Teilaspekt davon darstellen. Hierdurch wird sichergestellt, dass das zumindest eine Einzelbild überhaupt das zu authentifizierende Sicherheitselement darstellt. Ist dies nicht der Fall, kann auf weitere Untersuchungen verzichtet werden und der Benutzer darauf hingewiesen werden, dass die mittels des Sensors 31 aufgenommenen Bilder zum Zweck der Authentifizierung ungeeignet sind und gegebenenfalls neu aufgenommen werden müssen.

Die Einzelbilder der Bildfolge werden dann mit dem Haar-Cascade-Algorithmus analysiert. Dieser beruht auf der Auswertung einer Vielzahl sogenannter "Haar-like" features in dem Einzelbild. Hierbei handelt es sich um Strukturen, die mit Haar-Wavelets, also Rechteckwellenzüge einer vorgegebenen Wellenlänge, verwandt sind. In zwei Dimensionen handelt es sich dabei einfach um benachbarte, alternierend helle und dunkle Rechteckbereich im Bild. Durch Verschieben einer Rechteckmaske über das Einzelbild werden die vorliegenden "Haar-like" features ermittelt. Die vorliegenden "Haar-like" features werden dann mit denjenigen verglichen, die im Motiv 11vorliegen sollen. Dies kann durch eine Filterkaskade erfolgen.

Der Haar-Cascade-Algorithmus hat den Vorteil, besonders wenig Rechenzeit und Computerresourcen zu benötigen. Es ist jedoch auch möglich, andere Bilderkennungsalgorithmen zu verwenden.

Zum Überprüfen, ob das Motiv 11 vorliegt, wird ein Vergleich des zumindest einen Einzelbilds mit einem vorher aufgenommenen Trainingsdatensatz durchgeführt wird. Dies kann im Rahmen des beschriebenen Haar-Cascade-Algorithmus, aber auch mittels anderer Algorithmen erfolgen.

Die Bilderkennung beruht also auf einer Form des Computerlernens. Dem Algorithmus werden keine konkreten Parameter vorgegeben, anhand welcher eine Klassifizierung des Bildinhalts erfolgt, vielmehr lernt der Algorithmus diese Parameter anhand des Trainingsdatensatzes.

Um den Trainingsdatensatzes zu erstellen, wird eine Mehrzahl von Bildern aufgenommen, wobei eine erste Teilmenge der Bilder jeweils Motiv 11 aufweist und eine zweite Teilmenge der Bilder jeweils das Motiv 11 nicht aufweist, und wobei jedem Bild der ersten Teilmenge alle jeweiligen Bildkoordinaten der zu erkennenden Merkmale des Motivs 11 zugeordnet werden.

Anhand der ersten und zweiten Teilmenge sowie der zugeordneten Bildkoordinaten wird dann ein Training des Bilderkennungsalgorithmus durchgeführt. Hierdurch lernt der Algorithmus, die Bilder korrekt zu klassifizieren und gegebenenfalls bewusst in den Trainingsdatensatz eingebrachte Störfaktoren, wie beispielsweise Reflektionen in den Bildern, zufälligen Schattenfall oder dergleichen zu ignorieren.

Wenn das Vorliegen des Motivs 11 bestätigt werden kann, wird anschließend aus zumindest einem Einzelbild der Bildfolge die Kontur des Motivs 11 ermittelt. Gegenüber der oben beschriebenen einfachen Bilderkennung, die lediglich eine Ja/Nein-Klassifizierung oder eine Wahrscheinlichkeitsaussage liefert, ob das Motiv 11 in dem Einzelbild vorhanden ist, werden so zusätzliche Informationen bereitgestellt. Insbesondere kann anhand der ermittelten Kontur das Vorliegen oder Nichtvorliegen von detaillierten Merkmalen des Motivs 11 überprüft werden. Dies liefert weitere Informationen, die zur Authentifizierung des Sicherheitselements beitragen können.

Zur Authentifizierung des Sicherheitselements 1 kann also lediglich ein Detail des gesamten Designs verwendet werden. Dies ermöglicht es, auch visuell erkennbare Sicherheitsmerkmale gleichsam im Design des Sicherheitselements 1 zu verbergen.

Um die Kontur des Motivs 11 zu bestimmen, kann eine Kantenerkennungsalgorithmus wie der Canny-Algorithmus verwendet werden.

Zur Anwendung des Canny-Algorithmus auf Farbbilder müssen diese zunächst in Graustufen überführt werden. In Graustufenbildern zeichnen sich Kanten durch starke Helligkeitsschwankungen zwischen benachbarten Pixeln aus und können somit als Unstetigkeiten der Grauwertfunktion des Bildes beschrieben werden.

Da solche Unstetigkeiten auch durch Bildrauschen verursacht werden können, ist es zweckmäßig, wenn bei der Ausführung des Kantenerkennungsalgorithmus eine Rauschfilterung, insbesondere mittels eines Gaußfilters mit einer bevorzugten Kernel-Größe von 3 bis 7, durchgeführt wird.

Unter Kernel wird hierbei eine Konvolutionsmatrix verstanden, die auf die Bildinformation angewendet wird. Die Konvolutionsmatrix des Gaußfilters entspricht der Normalverteilung und wirkt als Tiefpassfilter. Der Grauwert eines gefilterten Pixels entspricht also dem mit der Normalverteilung gewichtetem Mittelwert der Grauwerte der umgebenden Pixel bis zu einer maximalen, von der Kernelgröße definierten Entfernung. Kleinere, durch Rauschen entstehende Strukturen gehen verloren, während die Hauptstrukturen des Motivs 11 erhalten bleiben.

Vorzugsweise wird bei der Ausführung des Kantenerkennungsalgorithmus eine Kantendetektion durch die Anwendung eines Sobel-Operators in zumindest einer Vorzugsrichtung des zumindest einen Einzelbilds, vorzugsweise in zwei orthogonalen Vorzugsrichtungen des zumindest einen Einzelbilds, durchgeführt.

Der Sobel-Operator ist ebenfalls ein Faltungsoperator, der als diskreter Differenzierer wirkt. Durch die Faltung des Bildes mit dem Sobel-Operators erhält man die partiellen Ableitungen der Grauwertfunktion in den zwei orthogonalen Vorzugsrichtungen. Hieraus kann dann die Kantenrichtung und Kantenstärke bestimmt werden.

Nach der Differenzierung der Grauwertdaten wird anschließend eine Kantenfilterung durchgeführt wird. Dies kann beispielsweise mittels einer sogenannten non-maximum suppression erfolgen, die sicherstellt, dass nur die Maxima entlang einer Kante erhalten bleiben, so dass eine Kante senkrecht zu ihrer Erstreckungsrichtung nicht breiter als ein Pixel ist.

Nach der Filterung kann dann eine schwellenwertbasierte Ermittelung der Bildkoordinaten der Kontur des Motivs 11 durchgeführt werden. Es wird also ermittelt, ab welcher Kantenstärke ein Pixel zu einer Kante zu zählen ist.

Hierzu kann beispielsweise ein Hysterese-basiertes Verfahren angewendet werden. Man legt hierzu zwei Schwellenwerte T₁ und T₂ fest, wobei T₂ größer ist als T₁. Ein Pixel mit einer Kantenstärke größer T₂ wird als Bestandteil einer Kante betrachtet. Alle mit diesem Pixel verbundenen Pixel mit einer Kantenstärke größer als T₁ werden ebenfalls dieser Kante zugerechnet.

Man erhält somit die Bildkoordinaten aller einer Kante des Motivs 11 zugehörigen Pixel in dem untersuchten Einzelbild. Diese können weiter analysiert werden, beispielsweise um einfache geometrische Formen zu erkennen.

Anschließend kann das Einzelbild auf Grundlage der ermittelten Bildkoordinaten des Motivs 11 in zumindest zwei Teilbereiche unterteilt werden und für jeden Teilbereich die ermittelten Bildkoordinaten der Kontur mit korrespondierenden Sollkoordinaten verglichen werden und hieraus insbesondere das Vorhandensein und/oder die Größe und/oder die Relativlage vorgegebener Konturen ermittelt wird. Die Teilbereiche werden dabei unter Berücksichtigung der Sollposition der zur Authentifizierung verwendeten Merkmale des Motivs 11 ausgewählt.

Um ein so untersuchtes Sicherheitselement als echt zu authentifizieren, muss dabei nicht zwingend eine absolute Übereinstimmung vorliegen, es ist auch möglich, Toleranzbereiche für erlaubte Abweichungen vorzugeben. Abweichungen müssen nicht unbedingt auf eine Fälschung hindeuten, da auch optische Artefakte, perspektivische Verzerrungen, Abnutzung oder Verschmutzung im Gebrauch oder ähnliche Effekte, die bei der Aufnahme des Einzelbildes auftreten können, die Übereinstimmung mit dem Original beeinträchtigen können.

Beispielsweise kann ein Teilbereich des Einzelbildes, welcher in einer vorgegebenen Lageposition zu der Kontur des Motivs 11 positioniert ist, und welche zumindest ein Pixel 12 und/oder zumindest eine Pixelgruppe des Einzelbildes umfasst, ausgewählt wird und zumindest eine Eigenschaft des zumindest einen Pixels 12 und/oder der zumindest einen Pixelgruppe des zumindest einen ausgewählten Teilbereichs mit einem korrespondierenden Sollwert verglichen wird. Damit kann beispielsweise das Vorhandensein des in Fig. 2 gezeigten Pixelmusters überprüft werden.

Auch Abweichungen in der Typographie, wie in Fig. 5 dargestellt, können anhand der ermittelten Konturdaten überprüft werden.

Zusätzlich kann überprüft werden, ob das Sicherheitselement eine optisch variable Struktur umfasst. Hierzu werden zwei Einzelbilder der Bildfolge verglichen, die mit unterschiedlichem Betrachtungs- und/oder Beleuchtungsbedingungen aufgenommen wurden.

Unterscheiden sich diese Einzelbilder ausreichend, so kann vom Vorliegen einer optisch variablen Struktur ausgegangen werden. Ist dies nicht der Fall, so liegt eine statische Kopie vor. Dabei genügt es, jeweils korrespondierende Pixel und/oder Pixelgruppen der Einzelbilder zu vergleichen, beispielsweise bezüglich ihrer Helligkeit oder ihres Farbwerts. Auf diese Weise kann ohne großen Verarbeitungsaufwand die Identität oder Nichtidentität der Einzelbilder festgestellt werden.

Für die Überprüfung auf Identität der Einzelbilder müssen also keinerlei Strukturen in den Einzelbildern erkannt werden, es genügt, OVD-typische Veränderungen aufgrund des geänderten Betrachtungs- oder Beleuchtungswinkels auf Pixelebene zu betrachten. Dies ist besonders effizient und spart Rechenzeit.

Alternativ oder zusätzlich zu der geschilderten Erkennung von makroskopischen Merkmalen des Motivs 11 können auch visuell nicht erkennbare Authentifizierungsmerkmale in das Sicherheitselement 11 integriert werden, beispielsweise in die in Fig. 3 und 4 gezeigte Gitterstruktur 14. Diese können zu einer weiteren Authentifizierung des Sicherheitselements 11 herangezogen werden, um die Fälschungssicherheit zu erhöhen.

Es ist zum Beispiel möglich, Bereiche, die sich in zumindest einem Gitterparameter unterscheiden, so ineinander zu rastern (Anordnung interlaced), dass sich visuell eine homogene Fläche ergibt. Die Unterschiede in der Gitterstruktur sind jedoch mit dem Sensor 31 des Geräts 3 auflösbar.

Die Rasterperiode wird dabei so gewählt, dass sie mit dem menschlichen Auge nicht auflösbar ist. Bevorzugte Rasterperioden sind dabei 10 µm bis 300 µm. Die Bereiche können sich beispielsweise in der Spatialfrequenz, den Azimutwinkel, der Relieftiefe, der Reliefform, einer Phase der Reliefstruktur, einer Periode einer Azimutvariation, einer Relieftiefenvariation und/oder einer Spatialfrequenzvariation eines ein- oder zweidimensionalen Gitters, einer Mittenrauigkeit einer Mattstruktur und/oder der Vorzugsrichtung einer anisotropen Mattstruktur unterscheiden.

Ein Beispiel für eine solche Struktur ist in den Figuren 6 bis 9 gezeigt. Während übliche Gitter gerade Gitterlinien mit einer vorgegebenen Spatialfrequenz und einem vorgegebenen Azimutwinkel aufweisen, variiert der Azimutwinkel des Gitters 14 in den genannten Figuren mit der räumlichen Position. Auf diese Weise können schlangenlinienförmig, parabolisch oder zirkulär gekrümmte Gitter 14 erzeugt werden. Die Periodizität dieser Variation liegt unterhalb der Auflösungsgrenze des menschlichen Auges, insbesondere unterhalb von 300 µm, vorzugsweise unterhalb von 150 µm, so dass das Gitter 14 in seiner Gesamtheit homogen erscheint und über seine ganze Fläche beim Kippen den gleichen optischen Effekt zeigt. Derartige Gitter 14 können eingesetzt werden, um besser zu definieren, unter welchen Betrachtungs- und Beleuchtungsbedingungen ein OVD hell oder dunkel oder spezifisch farbig erscheint.

Mit der gleichen Periodizität wie die Variation des Azimutwinkels sind zudem Bereiche 141, 142 des Gitters 14 ineinander gerastert. Auch diese Rasterung ist somit für das menschliche Auge nicht auflösbar. Der Bereich 141 bildet dabei einen Hintergrund für die als Motiv ausgestalteten Bereiche 142.

In den gezeigten Beispielen unterscheiden sich die Gitter der Bereiche 141 und 142 dadurch, dass die Phase der Azimutvariation zwischen den Bereichen 141 und 142 um 180° verschoben ist. Während dies bei einem üblichen Betrachtungsabstand von 30 cm mit dem menschlichen Auge nicht wahrnehmbar ist, können diese Bereiche vom Sensor 31 aufgelöst werden, so dass die durch die Anordnung und Form der Bereiche 141, 142 repräsentierte Information zum Authentifizieren des Sicherheitselements 1 genutzt werden kann.

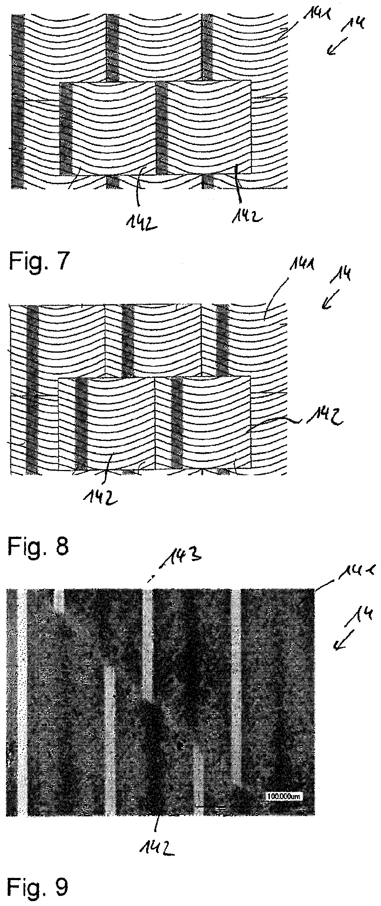

Fig. 7 und 8 zeigen ein alternatives Gitter 14 unter verschiedenen Betrachtungswinkeln. Die dunkel hinterlegten Areale repräsentieren erscheinen unter dem jeweiligen Betrachtungswinkel für den Sensor 31 hell vor dunklem Hintergrund. Es ist zu erkennen, dass sich diese Areale beim Kippen des Sicherheitselements 1 relativ zum Sensor 31 bewegen. Auch dieser Effekt kann lediglich mit dem Sensor 31 wahrgenommen werden, während das Gitter 14 für das bloße Auge homogen erscheint.

Die Bereiche 141, 142 sind in diesem Fall mit einer Rasterperiode von 100 µm ineinander gerastert, die Spatialfrequenz des Gitters beträgt 667 Linien/mm, die Periode der Azimutvariation 80 µm mit einer Azimutänderung von +/- 30°.

Eine konkrete Ausführung des in den Fig. 7 und 8 gezeigten Gitters 14 ist in Fig. 9 in elektronenmikroskopischer Aufnahme gezeigt. Die das Bild durchlaufende diagonale Linie 143 stellt die Grenze zwischen einem Hintergrundbereich 141 und dem Motivbereich 142 dar.

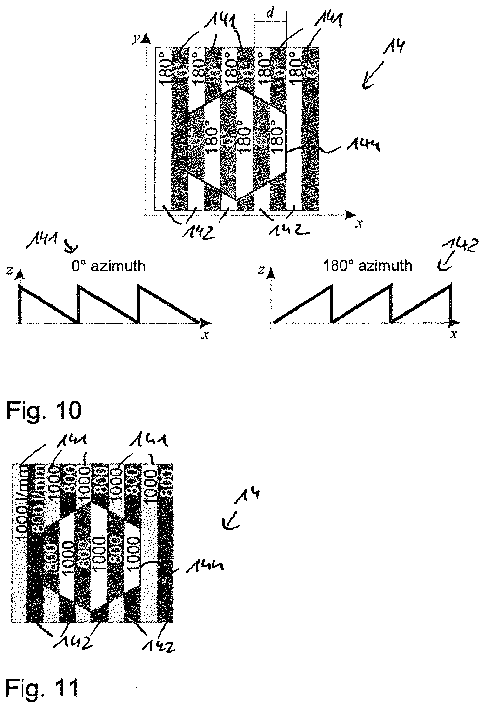

Wie Fig. 10 zeigt, können auch Bereiche 141, 142 mit jeweils konstantem Azimutwinkel, der sich jedoch zwischen den Bereichen 141 und 142 um 180° unterscheidet, ineinander gerastert werden (Anordnung interlaced). Die Bereiche werden dabei so angeordnet, dass sich ein phasenverschobenes Motiv 144 ergibt. Hierzu ist ein asymmetrisches Gitter, beispielsweise ein Blazegitter nötig. Die Gitter können dabei chromatisch (Blazegitter mit einer Periode von ca. 1 µm) oder achromatisch (Blazegitter mit einer Periode vom mehr als 5 µm) sein.

In den Bereichen 141 beträgt der Azimutwinkel 0°, so dass eine starke Beugung erster Ordnung sichtbar wird, während in den Bereichen 142 mit einem Azimutwinkel von 180° eine schwache Beugung der Ordnung -1 sichtbar ist. Die Breite der Bereiche, also die Periode der Rasterung, beträgt etwa 100 µm, so dass die Fläche wiederum visuell homogen erscheint. Durch Anwendung eines Rasterfilters auf das mit dem Sensor 31 aufgenommene Bild kann das Motiv 144 jedoch aufgelöst werden.

Analog ist auch eine Rasterung von Bereichen 141, 142 möglich, die jeweils anisotrope Mattstrukturen mit unterschiedlichen Azimutorientierungen oder isotrope Mattstrukturen mit unterschiedlichen Streucharakteristiken darstellen. Die Dimensionen des Rasters sind dabei die gleichen wie in Fig. 10. Die Bereiche 141, 142 unterscheiden sich dann in ihrem Grauwert. Die gesamte Struktur erscheint wiederum visuell homogen, kann jedoch ebenfalls durch Anwendung eines Rasterfilters auf das mit dem Sensor 31 aufgenommene Bild aufgelöst werden.

Ebenso ist eine Rasterung von Bereichen 141, 142 mit unterschiedlicher Spatialfrequenz möglich, wie in Fig. 11 gezeigt. Für einen gegebenen Betrachtungswinkel haben die Bereiche 141, 142 dann unterschiedliche Farben, die gesamte Fläche des Gitters 14 erscheint dem menschlichen Auge jedoch homogen. Im Beispiel der Fig. 10 haben die Bereiche 141 eine Spatialfrequenz von 1000 Linien/mm und die Bereiche 142 von 800 Linien/mm, die Bereiche sind mit einer Rasterperiode von 300 µm ineinander gerastert. Für den Sensor 31 ist wiederum das phasenverschobene Motiv 144 erkennbar.

Um noch besser zu vermeiden, dass die unterschiedlichen Farben der Bereiche 141, 142 beim Kippen des Sicherheitselements 1 sichtbar werden, ist es zweckmäßig, wenn die Spatialfrequenzen des Gitters in den Bereichen 141, 142 näher beisammen liegen. Beispielsweise kann der Bereich 141 von einem Sinusgitter mit einer Spatialfrequenz von 900 Linien/mm und der Bereich 142 von einem Sinusgitter mit einer Spatialfrequenz von 800 Linien/mm gebildet werden.

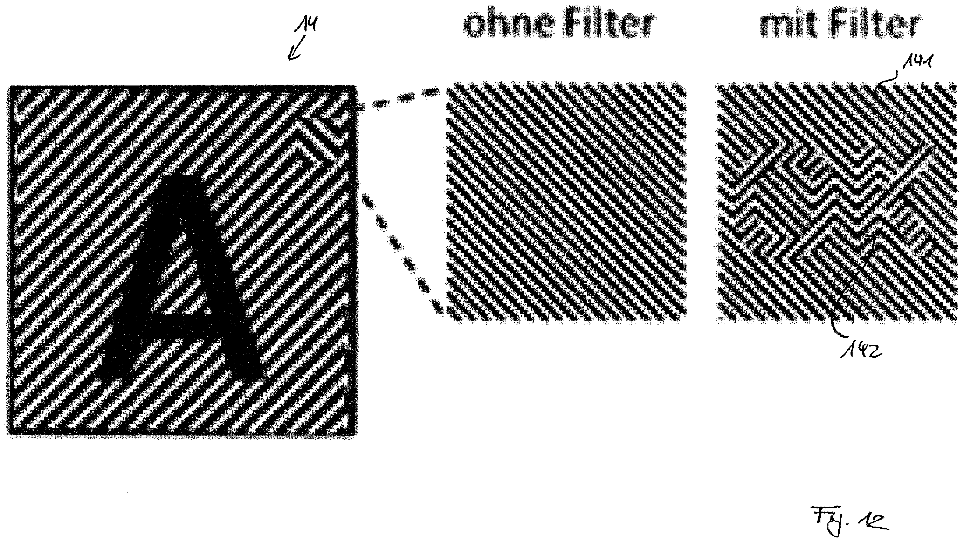

Eine weitere Option ist in Fig. 12 gezeigt. Hier unterscheiden sich die Bereiche 141, 142 geringfügig in der Gittertiefe und damit der Effizienz, so dass sich ein metamerisches Farbpaar ergibt. Ist beispielsweise die Effizienz des Gitters in den Bereichen 141, 142 für Rot leicht unterschiedlich, so kann das Motiv 144 durch einen Rotfilter sichtbar gemacht werden, wie ganz rechts in der Figur gezeigt. Die Größe der Bereiche 141 und 142 ist vorzugsweise so klein gewählt, dass die Bereiche für das menschliche Auge unscheinbar sind, aber mit dem Sensor noch gut aufgelöst werden können.

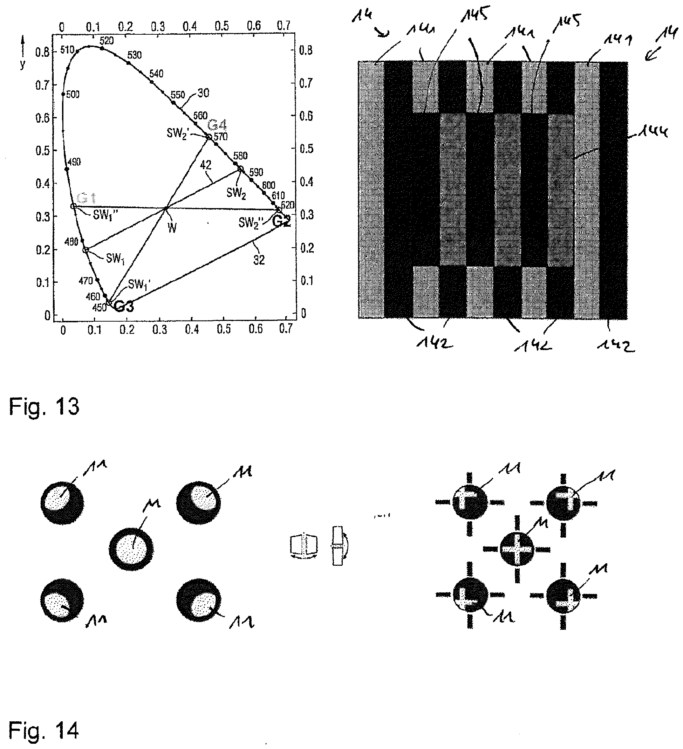

Wie Fig. 13 zeigt, können auch mehr als zwei unterschiedliche Bereiche 141, 142, 145, 146 des Gitters 14 verwendet werden. Die Bereiche 141, 142, die den Hintergrund für das Motiv 144 bilden, erscheinen dabei in den Farben G1 (485 nm) und G2 (620 nm). Die Bereiche 145 und 146, die das Motiv 144 bilden, erscheinen in den Farben G3 (450 nm) und G4 (568 nm).

Aufgrund der geringen Periode der Rasterung der Bereiche (weniger als 300 µm), erscheint das Motiv 144 und der Hintergrund jeweils homogen, und zwar als Mischfarbe aus den Farben G1+G2 bzw. G3+G4. Wie das links dargestellte Farbdiagramm zeigt, können die Farben so gewählt werden, dass G1+G2 und G3+G4 jeweils die gleiche Mischfarbe bilden. Für das bloße Auge erscheint damit das gesamte Gitter 14 homogen.

Durch Farbfilterung mittels des Geräts 3 kann das Motiv 144 jedoch wiederum aufgelöst werden. Dies ist auch bei Beleuchtung mit unterschiedlichen Lichtquellen möglich. Beispielsweise kann das Gerät 3 ein Einzelbild, welches bei Tageslicht aufgenommen wurde, mit einem Einzelbild, welches mit Blitzlicht aufgenommen wurde, vergleichen.

Ähnliche Farbeffekte lassen sich auch nutzen, um versteckte Motive 144 in ein Echtfarbhologramm zu integrieren.

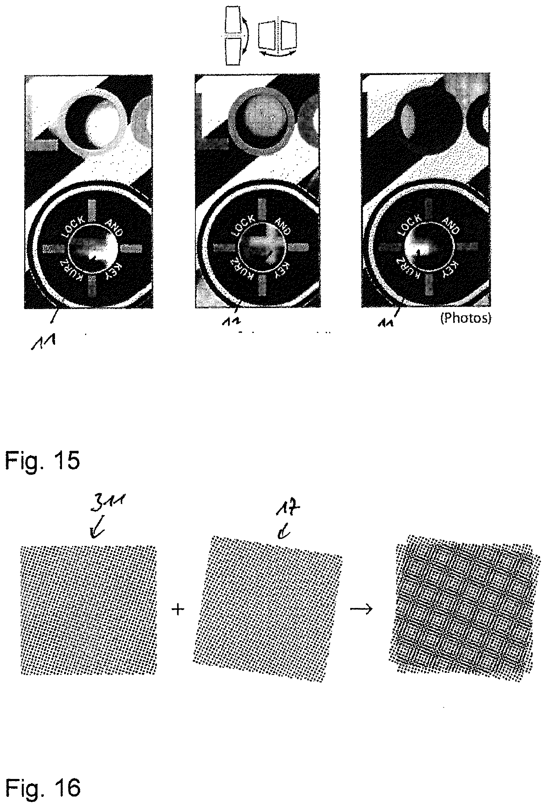

Wie Fig. 14 und 15 zeigen, können auch Motive 11 in das Sicherheitselement 1 eingebracht werden, die beim Kippen des Sicherheitselements 1 einen Parallaxeneffekt in zwei Raumrichtungen zeigen. Das Motiv 11 bewegt sich also in Abhängigkeit vom Betrachtungswinkel scheinbar in zwei Richtungen relativ zu den umgebenden Strukturen. Unter typischen Beleuchtungsverhältnissen eignen sich hierfür insbesondere einfache Motive 11, wie Kreise oder Kreuze, da komplexere Motive hier leicht verschwimmen.

Die Relativlage des Motivs 11 zu den umgebenden Strukturen kann nun genutzt werden, um aus einem aufgenommenen Einzelbild zu rekonstruieren, welche Relativlage das Sicherheitselement 1 bei der Aufnahme des Einzelbildes zum Sensor 31 hatte. Neben definierten diffraktiven umgebenden Strukturen kann auch die Relativlage zu einem diffraktiven Hintergrundbild ausgenutzt werden (Ghost Image).

Solche Motive 11 werden bei der Beleuchtung mit Punktlichtquellen deutlicher erkennbar. Bei der Verwendung von komplexen Motiven können diese bei diffuser Umgebungsbeleuchtung fast vollständig verschwimmen. Hier ist wieder ein Vergleich zwischen einem Einzelbild bei Umgebungsbeleuchtung und einem Einzelbild mit Blitzlicht möglich. Das Blitzlicht kann dabei verborgene Motive 11 sichtbar machen, die nur bei Punktbeleuchtung erkennbar sind. Auch die bekannte Relativposition des Blitzlichts zum Bildsensor ist dabei hilfreich.

Generell können visuell nicht erkennbare Strukturen, die nur mit dem Sensor 31 aufgelöst werden können, auch in computergenerierte Hologramme integriert werden. Dabei kann es sich beispielsweise um versteckte Punkt- oder Linienmuster wie in Fig. 2 handeln.

Wie Fig. 16 zeigt, kann ferner die Tatsache ausgenutzt werden, dass die Sensoren 31 von Smartphones oder dergleichen üblicherweise als CCD-Arrays ausgeführt sind. Die Sensoren 31 weisen also ein periodisches Raster 311 von einzelnen photosensitiven Elementen auf. Wird auf dem Sicherheitselement 1 eine Rasterstruktur 17 mit einer geeigneten Rasterweite aufgebracht, so ergibt sich beim Aufnehmen der Bildfolge in geeignetem Abstand ein Moire-Effekt zwischen den beiden Rastern 311 und 17.

Die einzelnen photosensitive Elemente des Sensors 31 weisen üblicherweise eine Größe von 1,5 bis 2 µm und sind ebenso weit voneinander beabstandet. Die Periode des Rasters beträgt daher 3 bis 4 µm. Der Moire-Effekt mit dem Raster 17 ergibt sich somit abhängig von der Rasterweite des Rasters 17 und dem Betrachtungsabstand. Dies kann ebenfalls zur Authentifizierung eines Sicherheitselements 1 genutzt werden.

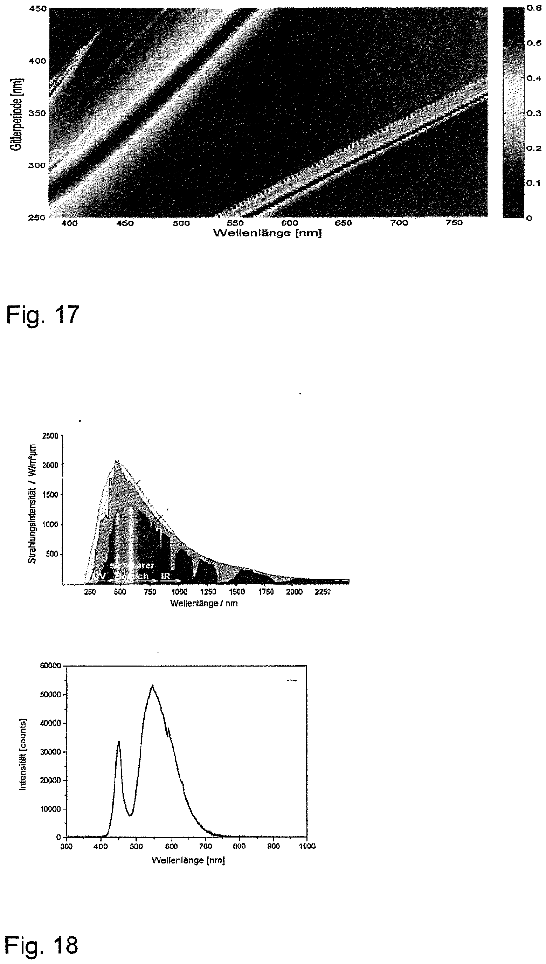

Die zur Authentifizierung des Sicherheitselements 1 genutzten optischen Effekte müssen dabei nicht im visuell wahrnehmbaren Spektrum liegen. Fig. 17 zeigt das Reflexionsverhalten verschiedener Sinusgitter Nullter Ordnung in Abhängigkeit von der Gitterperiode und der Wellenlänge. Gerade bei Gittern Nullter Ordnung, die mit einer transparenten Schicht aus einem hochbrechenden Material wie beispielsweise ZnS versehen sind, kann auch die Reflektion im Infrarotbereich genutzt werden. Beispielsweise besitzt ein Gitter Nullter Ordnung mit einer Gitterperiode von 350 nm einen Reflexionspeak im sichtbaren Spektralbereich bei ca. 470 nm und gleichzeitig einen zweiten Reflexionspeak bei ca. 760 nm. Der längerwellige Reflexionspeak ist für das menschliche Auge praktisch nicht mehr erkennbar.

Die Auswertbarkeit des optischen Effektes hängt jedoch auch von der Qualität des zur Aufnahme der Bildfolge verwendeten Lichts ab. Fig. 18 zeigt einen Vergleich des Sonnenspektrums (oben) mit dem Spektrum eines typischen Smartphone-Blitzlichts (unten). Wie zu erkennen ist, steht im Sonnenspektrum eine hinreichende IR-Intensität zur Verfügung, während das Blitzlicht kaum Infrarotanteile besitzt. Für diese Art der Authentifizierung empfiehlt es sich daher, Sonnenlicht zu nutzen.

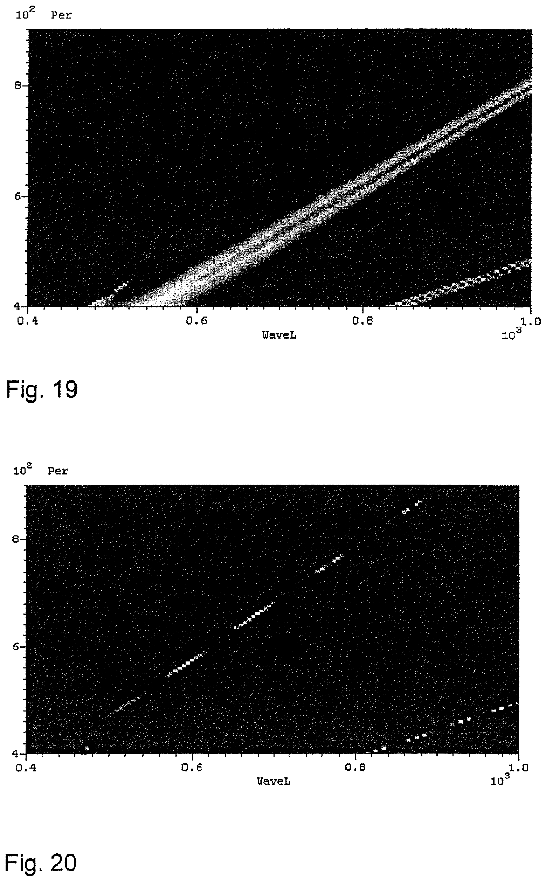

In den Figuren 19 und 20 ist das Reflektionsverhalten eines konkreten Ausführungsbeispiels in Abhängigkeit von Gitterperiode und Wellenlänge bei transversal elektrischer und transversal magnetischer Polarisation gezeigt. Die Gittertiefe des Sinusgitters beträgt dabei 200 nm. Das Gitter ist mit einer 80 nm dicken Schicht aus ZnS mit einem Brechungsindex von ca. 2,3 im sichtbaren Spektralbereich (Realteil des komplexen Brechungsindex) versehen, wobei das Gitter in Polymer mit einem Brechungsindex von ca. 1,59 eingebettet ist. Der Betrachtungswinkel beträgt 25°.

Es ist zu erkennen, dass ein Gitter mit einer Periode von 700 nm bei transversal elektrischer Polarisation deutliche charakteristische Reflektion im nahen Infrarot zeigt, die man für eine Authentifizierung verwenden kann.

Weiter ist es möglich, Motive 11 zu verwenden, die dynamische oder statische Matteffekte vor einem diffraktiven schwarzen Hintergrund, einem reflektiv schwarzen oder farbigen Hintergrund zeigen. Solche Strukturen können wie oben beschrieben mit Bild- und Kantenerkennungsalgorithmen ausgewertet werden. Die Größe der Strukturen, im einfachsten Fall Punkte, beträgt bevorzugt 100 µm bis 600 µm. Die Strukturen können sich auch durch kleine Abweichungen im Azimutwinkel vom Hintergrund unterscheiden. Je mehr Elemente mit einem solchen Effekt in das Motiv 11 integriert werden, desto besser ist die Authentifizierungsgenauigkeit.

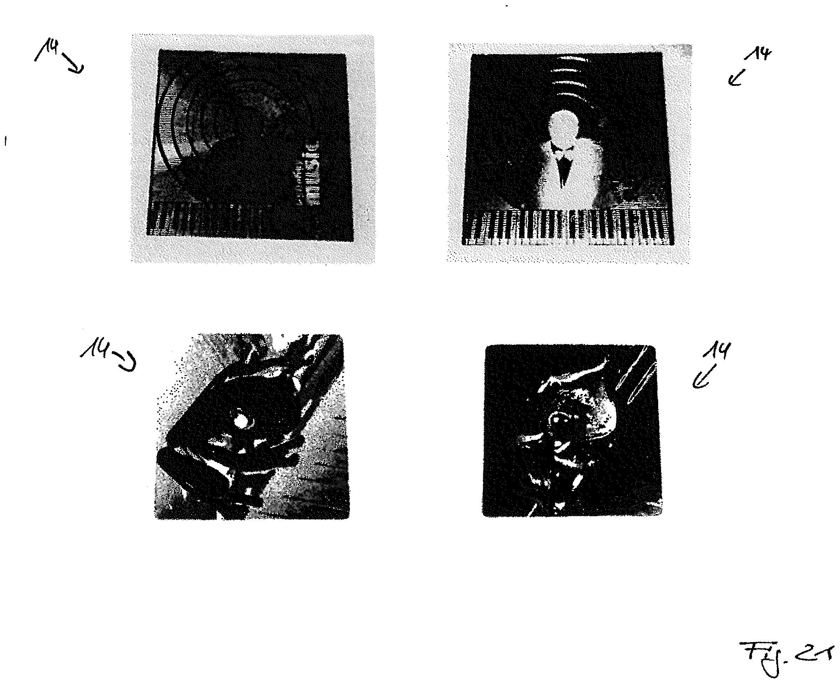

Optional kann auch das Motiv 11 mit dem sogenannten dynamischen Matteffekt großflächig gewählt werden, so dass der Matteffekt für das Auge klar erkennbar ist. Wird hierbei bei der Authentifizierung eine Bildfolge mit mindestens einem Bild mit und einem ohne Blitz aufgenommen, so kann die zumindest bereichsweise auftretende Kontrastumkehr ausgewertet werden. Diese Kontrastumkehr hat Ihre Ursache in der speziellen Streueigenschaft anisotroper Mattstrukturen, die für diesen dynamischen Matteffekt eingesetzt werden. Mit Blitz wird das Motiv 11 aus nahezu der gleichen Richtung beleuchtet, aus der es auch mit dem Sensor aufgenommen wird. Ohne Blitz hingegen kommt aus dieser Richtung sehr wenig Licht, die Beleuchtung erfolgt also aus anderen Richtungen. Zusammen resultiert dies in einer Kontrastumkehr des Motivs 11. Fig. 21 zeigt Bildaufnahmen mit und ohne Blitz für zwei beispielhafte Motive hergestellt mit anisotropen Mattstrukturen.

Das Motiv 11 kann ferner ein Portrait umfassen, welches mittels eines Graustufenbilds, Echtfarbhologramms, computergenerierten Hologramms oder als Oberflächenreliefportrait realisiert sein kann. Zur Authentifizierung des Sicherheitselements 1 kann dann ein biometrischer Algorithmus angewendet werden. Hierfür eignen sich insbesondere Portraitvarianten mit hohem Detailreichtum.

Das Motiv 11 kann auch softwareseitig im Gerät 3 um weitere Elemente ergänzt werden, woraufhin anschließend geprüft wird, ob sich eine Sollstruktur ergibt. Damit können kryptographische Methoden in das Verfahren integriert werden, wobei die softwareseitig ergänzten Elemente als privater Schlüssel und das Motiv als öffentlicher Schlüssel wirkt.

Die zur Verifikation des Sicherheitselements 1 herangezogenen Strukturen des Motivs 11 können auch bedeutungstragend sein, beispielsweise in Form eines Linearcodes oder Barcodes. Wenn diese Strukturen sehr klein sind, beispielsweise kleiner als 100 µm, so sind sie wiederum mit dem bloßen Auge nicht sichtbar, können aber vom Sensor 31 erkannt werden. Wenn hierfür diffraktive Strukturen verwendet werden, beispielsweise ein diffraktiver Barcode mit stark Licht absorbierenden und damit optisch dunkel, vorzugsweise schwarz wirkenden Reliefstrukturen auf einem Hintergrund mit isotrop matten Reliefstrukturen, kann das Gerät 3 problemlos zwischen dem echten Sicherheitselement und einer statischen gedruckten Kopie unterscheiden. Hierzu können beispielsweise noch die Farbe, Intensität oder die Rasterstruktur des diffraktiven Codes herangezogen werden.

Die bedeutungstragenden Strukturen des Motivs 11 können dabei integraler grafischer Bestandteil des Motivs 11 sein. D.h. die bedeutungstragenden Strukturen des Motivs 11 sind gleichzeitig Teil einer grafischen Darstellung, beispielsweise eines Logos, Wappens, Portraits oder Denomination. Die bedeutungstragenden Strukturen des Motivs 11 können aber ebenso separat, d.h. optisch abgesetzt vom eigentlichen grafischen Motiv in einem separaten Bereich angeordnet sein, um beispielsweise auch separat auslesbar bzw. verifiziert werden zu können. Beispielsweise kann neben dem Motiv 11, insbesondere benachbart dazu, ein diffraktiver Barcode angeordnet sein. Der diffraktive Barcode kann alternativ dazu in die grafische Anordnung des Motivs 11 integriert sein.

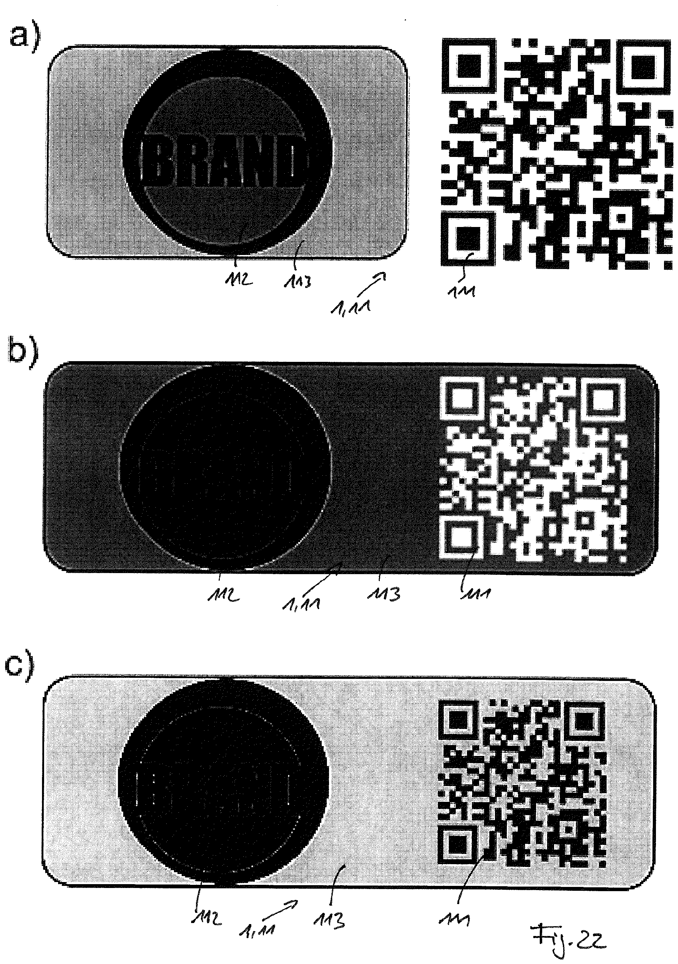

Drei mögliche Ausführungen eines Sicherheitselements 1 mit einem einen 2D-Barcode 111 umfassenden Motiv 11 sind in den Figuren 22 A-C dargestellt. Alle Ausführungsbeispiele umfassend dabei jeweils den Barcode 111, ein graphisches Motiv 112, beispielsweise ein Markenlogo, sowie eine zumindest teilmetallisierte Fläche 113. In allen Ausführungsbeispielen ist das graphische Motiv 112 als auf der teilmetallisierten Fläche 113 angeordnetes diffraktives Motiv ausgebildet.

Im in Fig. 22A gezeigten Ausführungsbeispiel erstreckt sich der Barcode 111 nicht über die teilmetallisierte Fläche 113, sondern ist als gedruckte Struktur neben dieser teilmetallisierten Fläche 113 angeordnet.

Im Ausführungsbeispiel nach Fig. 22B liegt der Barcode 111 innerhalb der Fläche 113 und ist durch gezielte Demetallisierung der Fläche 113, beispielsweise mittels Laserablation, erzeugt.

Im Ausführungsbeispiel nach Fig. 22C ist der Barcode 111 ebenfalls innerhalb der Fläche 113 angeordnet und wie auch das graphische Motiv 112 als diffraktive Struktur realisiert.

In allen Fällen kann der Barcode 111 unter Verwendung des beschriebenen Verfahrens mittels eines Handgeräts 3 ausgelesen werden, so dass das Sicherheitselement 1 authentifiziert werden kann. Der Barcode 111 selbst kann dabei noch Individualisierungsinformationen enthalten, die die Zuordnung des Sicherheitselements 1 zu einem bestimmten Objekt oder Dokument ermöglichen. Dies ist insbesondere möglich, wenn der Barcode 111 durch Tintenstrahldruck oder Laserablation erzeugt wird.

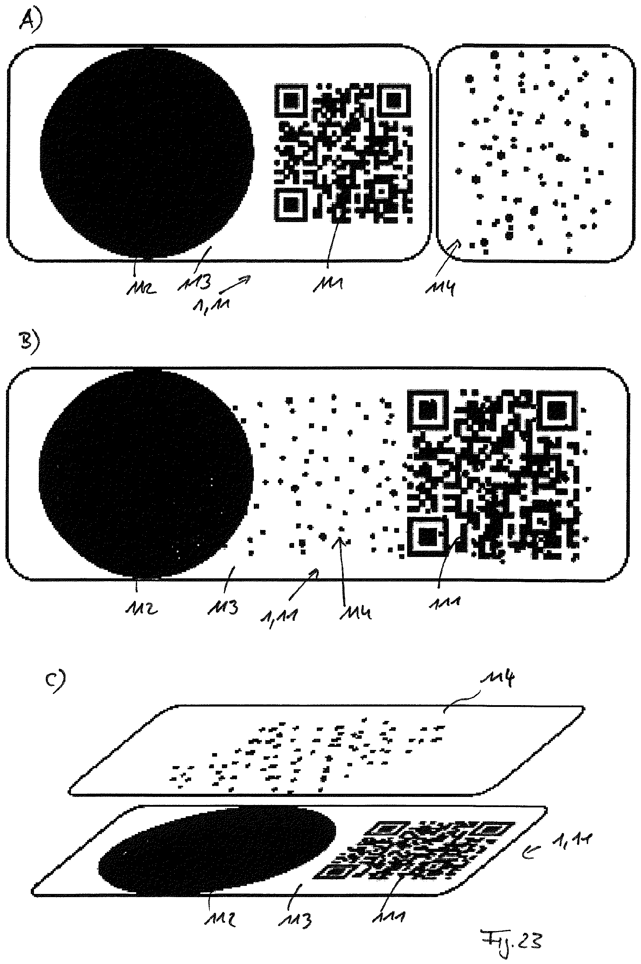

Solche Individualisierungsinformationen können jedoch auch zusätzlich zu dem Barcode 111 in das Sicherheitselement 1 eingebracht werden. Drei Möglichkeiten dazu sind in den Figuren 23 A-C dargestellt.

Derartige zusätzliche Individualisierungsinformationen 114 können ebenso wie der Barcode 111 mittels eines Handgeräts 3 ausgelesen werden. Um zusätzliche Sicherheit zu gewährleisten, ist es dabei auch möglich, wenn die Individualisierungsinformationen 114 nur mit speziellen Geräten, beispielsweise mit spezieller Beleuchtung oder speziellen Kamerafiltern oder auch einer speziellen softwareseitigen Ausstattung ausgelesen werden können.

In den gezeigten Ausführungsbeispielen ist die Individualisierungsinformation 114 als zufälliges oder pseudozufälliges Punktmuster ausgebildet. Zufallszahlen oder Pseudozufallszahlen zur Erzeugung des Punktmusters können dabei aus physikalischen Quellen, beispielsweise aus in der Natur vorkommenden zufälligen Verteilungen, gewonnen oder auch algorithmisch erzeugt werden.

Wie Fig. 23A zeigt, kann die Individualisierungsinformation 114 separat vom Barcode 111 angeordnet werden. Beispielsweise können Barcode 111 und Individualisierungsinformation 114 auf separaten Transferfolien erzeugt und getrennt voneinander auf das Sicherheitselement 1 aufgebracht werden.

Alternativ dazu können sich Barcode 111 und Individualisierungsinformation 114 auch überlappen. Wie Fig. 23B zeigt, kann dies durch direkte Integration der Individualisierungsinformation 114 in die Struktur des Barcodes 111 bewerkstelligt werden. Beispielsweise können beide Informationen durch die gleiche diffraktive Struktur gebildet werden.

Alternativ können Barcode 111 und Individualisierungsinformation 114 auch sequenziell aufgebracht werden, wie in Fig. 23C gezeigt. Hierbei wird beispielsweise der Barcode 111 mittels einer Transferfolie aufgebracht und anschließend die Individualisierungsinformation 114 darüber gedruckt. Alternativ kann die Individualisierungsinformation 114 auch durch das Einbringen von zufällig verteilten Partikeln, Fasern oder anderen Markern in die Transferfolie erzeugt werden.

Wenn der Barcode 111 als Reliefstruktur ausgebildet ist, die durch Replikation in eine Replizierschicht abgeformt und anschließend metallisiert wird, kann die Individualisierungsinformation 114 ferner auch durch anschließende partielle Demetallisierung der Metallschicht 113, beispielsweise durch Laserablation, erzeugt werden.

Es ist ferner auch möglich, eine zufällige Individualisierungsinformation 114 mit einer weiteren zufälligen Reliefstruktur zu kombinieren. Als Reliefstrukturen können dabei alle bereits vorstehend geschilderten Varianten genutzt werden, insbesondere eignen sich hier isotrope oder anisotrope Mattstrukturen, lineare, gekreuzte, schlangenlinienförmige oder kreisförmige Gitter, mikrostruktur-basierte Farbstrukturen wie computergenerierte Hologramme oder zufällige Farbstrukturen, Kinoform-Strukturen oder dergleichen. Eine zusätzliche Individualisierung kann dann wieder durch Aufbringen einer Individualisierungsinformation 114 mittels Laserablation oder Druck, insbesondere Tintenstrahldruck, erfolgen.

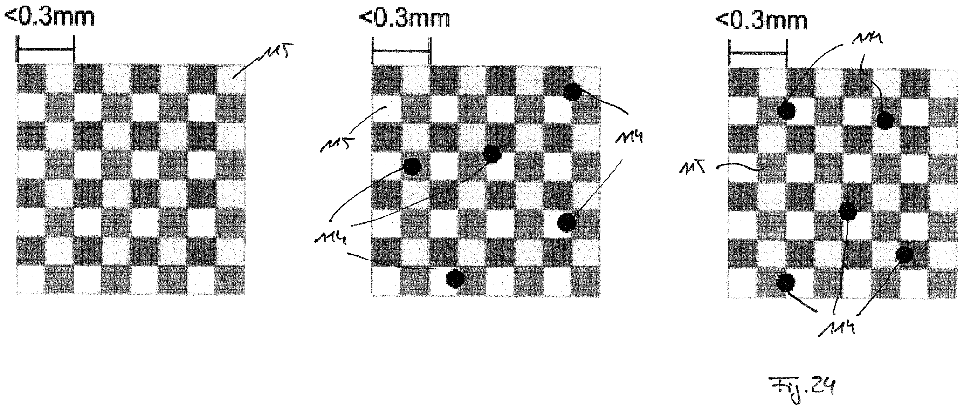

Wie Fig. 24 zeigt, ist es dabei vorteilhaft, wenn der Hintergrund für die Individualisierungsinformation 114 von einem Mosaik oder einer Überlagerung von Reliefstrukturen gebildet wird, die mittels des Handgeräts 3 differenziert werden können. Vorzugsweise sind die einzelnen Felder 115 eines solchen Mosaiks klein genug, dass sie mit dem menschlichen Auge nicht aufgelöst werden können. Wird die Individualisierungsinformation 114, wie in Fig. 24 A-C gezeigt, nach Erzeugung des Mosaiks beispielsweise durch Laserablation in Form einzelner Punkte eingeschrieben, so ergibt sich allein durch die notwendigerweise vorhandene Toleranz des Fertigungsprozesses eine zufällige Abweichung in der Positionierung der Individualisierungsinformation 114 relativ zu den Feldern 115 des Mosaiks, die sich für jedes Sicherheitselement 1 unterscheidet und so zur Identifizierung individueller Sicherheitselemente 1 genutzt werden kann.

Eine Individualisierungsinformation 114 kann ferner durch partielle Auslöschung einer Reliefstruktur durch Aufdrucken eines Lacks mit dem gleichen Brechungsindex wie die Replizierschicht, in die die Reliefstruktur eingeformt ist, erzeugt werden. Wo der Lack aufgedruckt wurde, ergibt sich kein optischer Effekt durch die ausgelöschte Reliefstruktur, nach einer folgenden Metallisierung erscheinen diese Regionen daher spiegelnd und können leicht mittels des Handgeräts 3 ausgelesen werden.

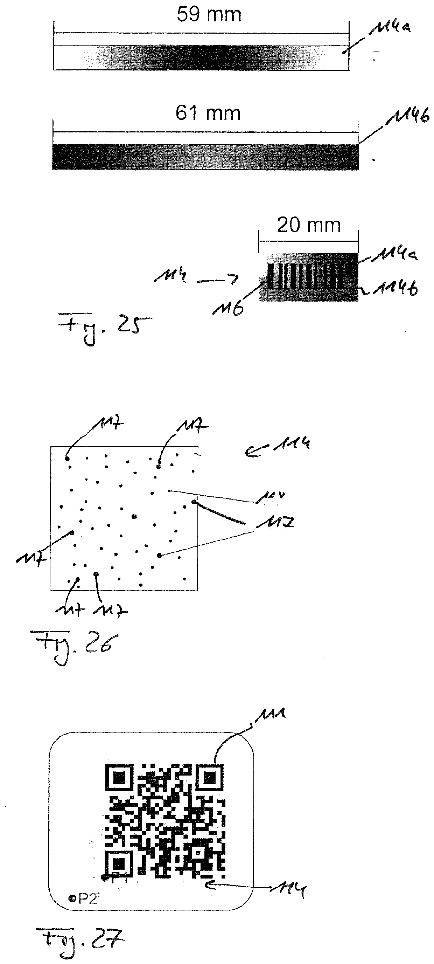

Eine Individualisierungsinformation 114 kann, wie in Fig. 25 gezeigt, ferner dadurch erzeugt werden, dass zwei streifenförmige optisch variable Strukturen, die jeweils über ihre Länge hinweg in zumindest einem Parameter variieren, nebeneinander oder übereinander angeordnet werden. Durch die Variation der jeweiligen Parameter ergibt sich je aus der relativen Anordnung der beiden Strukturen zueinander für jeden Punkt entlang der Längserstreckung ein spezifisches Parameterpaar.

Beispielsweise kann eine in ihrer Helligkeit variierende dynamische Mattstruktur 114a, beispielsweise mit einer graduellen Änderung des Azimutwinkels von 0° bis 90°, neben einem diffraktiven Farbverlauf 114b, beispielsweise mit einer graduellen Änderung der Gitterperiode von 500 Linien pro mm bis 1500 Linien pro mm, angeordnet werden. Für jeden Punkt entlang der Längserstreckung kann man dann ein Wertepaar aus Farbe und Helligkeit auslesen. Durch einen beim Anbringen der beiden Strukturen gewählten Versatz in der Längsrichtung können diese Wertepaare individualisiert und zur Erkennung spezifischer individueller Sicherheitselemente 1 genutzt werden. Die beiden Strukturen können ferner noch mit einem Zufallsmuster 116 überlagert werden, welches auszulesende Zonen definiert.

In einer weiteren Ausführungsform können punktförmige Marker 117 in ein diffraktives Hintergrundmuster 118 integriert werden, um die Individualisierungsinformation 114 zu bilden, wie in Fig. 26 dargestellt. Bei den Markern kann es sich allgemein um beliebige chemische oder physikalische Marker, insbesondere um Pigmente, Nanopartikel, kristalline Partikel und dergleichen handeln. Zur zusätzlichen Absicherung können auch die Absorptions-, Emissionsoder Brechungsspektren der Marker 117 mittels des Handgeräts 3 analysiert werden.

Bevorzugt werden die Marker zufällig verteilt. Dies kann beispielsweise durch Beimischung einer geringen Konzentration von Markern 117 in einen Lack erfolgen. Beim Auftragen und Aushärten des Lackes ergibt sich die gewünschte Zufallsverteilung, die zur Individualisierung genutzt werden kann.

Wird ein Barcode 111 über ein Individualisierungsmuster 114 gedruckt, so kann auch die partielle Überdeckung und damit Auslöschung des Individualisierungsmusters 114 durch den Barcode 111 zur Authentifizierung und Identifizierung des Sicherheitselements 1 herangezogen werden. Ein Beispiel hierfür zeigt Fig. 27. Auch die Lagebeziehung zwischen einzelnen Strukturen des Individualisierungsmusters 114 und dem Barcode 111 kann ausgelesen und analysiert werden.

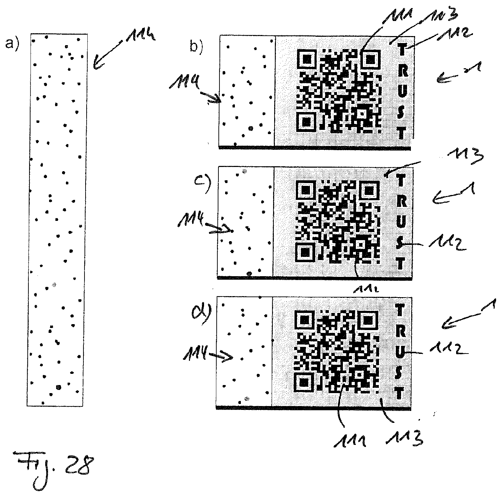

Fig. 28 zeigt ein weiteres Beispiel für ein Individualisierungsmuster 114. Hierbei wird zunächst ein diffraktives Individualisierungsmuster 114 auf ein streifenförmiges Substrat repliziert (Fig. 28A). Die wiederholungsfreie Maximallänge des Streifens ist dabei durch den Umfang der Replizierwalze bedingt.

Lediglich ein Teil dieses Streifens wird dann neben dem Barcode 111 auf das Sicherheitselement 1 aufgebracht. Wie die Fig. 28B-D zeigen, ergibt sich damit je nach gewähltem Abschnitt des Streifen eine individuelle Lagebeziehung zwischen dem Individualisierungsmuster 114 und dem Barcode 111, die ausgelesen und zur Authentifizierung herangezogen werden kann.

## Patentansprüche

1. Verfahren zum Authentifizieren eines optisch variablen Sicherheitselements (1), insbesondere eines diffraktiven Sicherheitselements, mit den Schritten:
a) Aufnehmen einer Bildfolge mit mindestens einem Einzelbild des Sicherheitselements (1) mittels eines Sensors (31) insbesondere eines Handgeräts (3), vorzugsweise eines Smartphones, Tablets oder eines PDAs;
b) Überprüfen, ob zumindest eine vorgegebene optische Information in zumindest einem Einzelbild der Bildfolge vorliegt,
wobei die Bildfolge eine Vielzahl von Einzelbildern des Sicherheitselements (1) umfasst, insbesondere mehr als 2 Einzelbilder des Sicherheitselements (1) umfasst, wobei anhand zumindest zweier Einzelbilder der Bildfolge überprüft wird, ob das Sicherheitselement (1) eine optisch variable Struktur umfasst,
**dadurch gekennzeichnet, dass** in Schritt b) zunächst überprüft wird, ob ein vorgegebenes Objekt in zumindest einem Einzelbild der Bildfolge vorliegt, wobei beim Überprüfen, ob die zumindest eine vorgegebene optische Information des optisch variablen Sicherheitselements (1) vorliegt, aus zumindest einem Einzelbild der Bildfolge die Kontur des vorgegebenen Objekts ermittelt wird und wobei zumindest ein Teilbereich des Einzelbildes, welcher in einer vorgegebenen Lageposition zu der Kontur eines vorgegebenen Objektes positioniert ist, und welche zumindest ein Pixel und/oder zumindest eine Pixelgruppe des Einzelbildes umfasst, ausgewählt wird und zumindest eine Eigenschaft des zumindest einen Pixels und/oder der zumindest einen Pixelgruppe des zumindest einen ausgewählten Teilbereichs mit einem korrespondierenden Sollwert verglichen wird.

2. Verfahren nach Anspruch 1,
**dadurch gekennzeichnet,**
**dass** zum Überprüfen, ob das vorgegebene Objekt vorliegt, mittels des Bilderkennungsalgorithmus ein Vergleich des zumindest einen Einzelbilds mit einem vorher aufgenommenen Trainingsdatensatz durchgeführt wird, wobei insbesondere zum Aufnehmen des Trainingsdatensatzes eine Mehrzahl von Bildern erstellt wird, wobei eine erste Teilmenge der Bilder jeweils das vorgegebene Objekt aufweist und eine zweite Teilmenge der Bilder jeweils das vorgegebene Objekt nicht aufweist, und wobei jedem Bild der ersten Teilmenge alle jeweiligen Bildkoordinaten der zu erkennenden Merkmale des vorgegebenen Objekts zugeordnet werden.

3. Verfahren nach einem der vorhergehenden Ansprüche,
**dadurch gekennzeichnet,**
**dass** während des Aufnehmens der Bildfolge in Schritt a) ein Winkel zwischen dem Sensor und dem Sicherheitselement und/oder ein Winkel zwischen einer Lichtquelle und dem Sicherheitselement (1) verändert wird, wobei insbesondere während des Aufnehmens der Bildfolge in Schritt a) mittels eines Lagesensors des Handgeräts (3) zu jedem Einzelbild der Bildfolge eine Relativlage des Handgeräts (3) zu einer vorgegebenen Position registriert und dem jeweiligen Einzelbild zugeordnet wird, und wobei vorzugsweise zum Überprüfen, ob das Sicherheitselement (1) eine optisch variable Struktur umfasst, in Schritt b) zwei Einzelbilder der Bildfolge verglichen werden, die mit unterschiedlichem Betrachtungs- und/oder Beleuchtungswinkel aufgenommen wurden.

4. Verfahren nach Anspruch 3,
**dadurch gekennzeichnet,**
**dass** zum Überprüfen, ob das Sicherheitselement (1) eine optisch variable Struktur umfasst, jeweils korrespondierende Pixel und/oder Pixelgruppen, insbesondere der Teilbereiche, der Einzelbilder verglichen werden.

5. Verfahren nach einem der vorhergehenden Ansprüche,
**dadurch gekennzeichnet,**
**dass** die zumindest eine vorgegebene optische Information eine Abweichung einer graphischen Eigenschaft, insbesondere einer Linienstärke, eines Farbwertes, eines Tonwertes, einer Helligkeit, einer Rasterdichte, einer Rasterausrichtung oder eines Schriftsatzes, zwischen einem ersten Teilbereich und einem zweiten Teilbereich einer weiteren optischen, visuell wahrnehmbaren Information des diffraktiven Sicherheitselements, insbesondere in Form eines Symbols, Logos, Bilds, Zeichens, alphanumerischen Charakters oder einer Zahl, und/oder eine Abweichung von einer Symmetrie zwischen einem ersten Teilbereich und einem zweiten Teilbereich einer weiteren optischen, visuell wahrnehmbaren Information des diffraktiven Sicherheitselements, insbesondere in Form eines Symbols, Logos, Bilds, Zeichens, alphanumerischen Charakters oder einer Zahl, und/oder eine visuell nicht erkennbare Information, die mit dem Sensor maschinell erfassbar ist, oder umfasst, und/oder
**dass** die zumindest eine vorgegebene optische Information durch eine Variation zumindest eines Reliefparameters einer Reliefstruktur des Sicherheitselements (1) zwischen zumindest einer ersten Zone und zumindest einer zweiten Zone des Sicherheitselements gebildet wird, wobei die in der ersten und/oder zweiten Zone vorgesehene Reliefstruktur insbesondere eine diffraktive Struktur, eine Beugungsstruktur Nullter Ordnung, ein Blaze-Gitter, eine Makrostruktur, insbesondere eine Linsenstruktur oder Mikroprismenstruktur, eine Spiegelfläche, eine Mattstruktur, insbesondere eine anisotrope oder isotrope Mattstruktur ist.

6. Verfahren nach einem der vorhergehenden Ansprüche,
**dadurch gekennzeichnet,**
**dass** die zumindest eine vorgegebene optische Information beim Aufnehmen der Bildfolge durch einen Moiré-Effekt zwischen einem periodischen Raster des Sicherheitselements (1) und einem periodischen Raster des Sensors (31), und/oder durch einen diffraktiven Effekt in einem Wellenlängenbereich außerhalb des sichtbaren Spektrums, insbesondere im Infrarot, erzeugt wird.

7. Verfahren nach einem der vorhergehenden Ansprüche,
**dadurch gekennzeichnet,**
**dass** überprüft wird, ob zumindest eine weitere optische Information in wenigstens einem Einzelbild der Bildfolge vorliegt, wobei die zumindest eine weitere optische Information insbesondere eine Individualisierungsinformation, insbesondere eine zufällige, pseudo-zufällige und/oder algorithmisch generierte Individualisierungsinformation ist.

8. Verfahren nach einem der vorhergehenden Ansprüche,
**dadurch gekennzeichnet,**
**dass** Schritt b) mittels eines auf einer Rechenvorrichtung des Handgeräts (3) ausgeführtem Softwareprogramm durchgeführt werden, wobei vorzugsweise das Softwareprogramm und/oder eine dem Softwareprogramm zugeordnete Datenbank in vorgegebenen Abständen, insbesondere vor jeder Durchführung des Verfahrens, über eine Telekommunikationsverbindung, insbesondere Internetverbindung, aktualisiert wird, oder dass Schritt b) mittels eines auf einer vom Handgerät (3) verschiedenen Rechenvorrichtung ausgeführtem Softwareprogramm durchgeführt werden, an welche die in Schritt a) aufgenommene Bildfolge über eine Telekommunikationsverbindung, insbesondere Internetverbindung, übermittelt wird.

9. Verfahren nach einem der vorhergehenden Ansprüche,
**dadurch gekennzeichnet,**
**dass** in einem weiteren Schritt c) überprüft wird, ob zumindest eine weitere vorgegebene optische Information in zumindest einem Einzelbild der Bildfolge vorliegt, welche bei einer bekannten Fälschung des optisch variablen Sicherheitselements (1) vorliegt und bei einem echten optisch variablen Sicherheitselement (1) nicht vorliegt, wobei vorzugsweise bei Nichtvorliegen der zumindest einen vorgegebenen optischen Information und bei Nichtvorliegen der zumindest einen weiteren vorgegebenen optischen Information eine Mitteilung an die vom Handgerät (3) verschiedene Rechenvorrichtung übermittelt wird, welche eine Orts- und/oder Zeitinformation, sowie zumindest ein Einzelbild der Bildfolge umfasst.

10. Gerät (3), insbesondere Handgerät mit einem Sensor (31) zum Aufnehmen einer Bildfolge mit mindestens einem Einzelbild eines Sicherheitselements (1) und einer Steuereinrichtung, welches so ausgestaltet ist, dass es die folgenden Schritte ausführt:
a) Aufnehmen einer Bildfolge mit mindestens einem Einzelbild des Sicherheitselements (1) mittels des Sensors (31);
b) Überprüfen, ob zumindest eine vorgegebene optische Information in zumindest einem Einzelbild der Bildfolge vorliegt,
wobei die Bildfolge eine Vielzahl von Einzelbildern des Sicherheitselements (1) umfasst, insbesondere mehr als 2 Einzelbilder des Sicherheitselements (1) umfasst, und wobei anhand zumindest zweier Einzelbilder der Bildfolge überprüft wird, ob das Sicherheitselement (1) eine optisch variable Struktur umfasst, **dadurch gekennzeichnet, dass** in Schritt b) zunächst überprüft wird, ob ein vorgegebenes Objekt in zumindest einem Einzelbild der Bildfolge vorliegt, wobei beim Überprüfen, ob die zumindest eine vorgegebene optische Information des optisch variablen Sicherheitselements vorliegt, aus zumindest einem Einzelbild der Bildfolge die Kontur des vorgegebenen Objekts ermittelt wird und wobei zumindest ein Teilbereich des Einzelbildes, welcher in einer vorgegebenen Lageposition zu der Kontur eines vorgegebenen Objektes positioniert ist, und welche zumindest ein Pixel und/ oder zumindest eine Pixelgruppe des Einzelbildes umfasst, ausgewählt wird und zumindest eine Eigenschaft des zumindest einen Pixels und/oder der zumindest einen Pixelgruppe des zumindest einen ausgewählten Teilbereichs mit einem korrespondierenden Sollwert verglichen wird.

## Claims

1. Method for authenticating an optically variable security element (1), in particular a diffractive security element, said method having the steps:
a) capturing an image sequence having at least one individual image of the security element (1) by means of a sensor (31), in particular of a hand-held device (3), preferably a smartphone, tablet or PDA;
b) verifying whether at least one predefined item of optical information is present in at least one individual image of the image sequence,
wherein the image sequence comprises a plurality of individual images of the security element (1), in particular comprises more than 2 individual images of the security element (1), wherein it is verified using at least two individual images of the image sequence whether the security element (1) comprises an optically variable structure,
**characterised in that**, in step b), it is initially verified whether a predefined object is present in at least one individual image of the image sequence, wherein, when verifying whether the at least one predefined item of optical information of the optically variable security element (1) is present, the contour of the predefined object is determined from at least one individual image of the image sequence, and wherein at least one partial region of the individual image, which is positioned in a predefined position relative to the contour of a predefined object and which comprises at least one pixel and/or at least one group of pixels of the individual image, is selected and at least one property of the at least one pixel and/or of the at least one group of pixels of the at least one selected partial region is compared with a corresponding setpoint value.

2. Method according to claim 1,
**characterised in that**
to verify whether the predefined object is present, the image recognition algorithm compares the at least one individual image with a previously captured training dataset, wherein in particular, to capture the training dataset, a plurality of images is created, wherein a first subset of each of the images has the predefined object and a second subset of each of the images does not have the predefined object, and wherein all respective image coordinates of the features to be recognised of the predefined object are allocated to each image of the first subset.

3. Method according to either one of the preceding claims,
**characterised in that**
during the capture of the image sequence in step a), an angle between the sensor and the security element and/or an angle between a light source and the security element (1) is changed, wherein, in particular, during the capture of the image sequence in step a), by means of a position sensor of the hand-held device (3), for each individual image of the image sequence, a relative position of the hand-held device (3) with respect to a predefined position is recorded and is allocated to the respective individual image, and wherein, preferably, to verify whether the security element (1) comprises an optically variable structure, two individual images of the image sequence that were captured at different angles of observation and/or angles of illumination are compared in step b).

4. Method according to claim 3,
**characterised in that**
to verify whether the security element (1) comprises an optically variable structure, in each case corresponding pixels and/or pixel groups, in particular of the partial regions, of the individual images are compared.

5. Method according to one of the preceding claims,
**characterised in that**
the at least one predefined item of optical information comprises a deviation of a graphical property, in particular a line thickness, a colour value, a tonal value, a brightness, a grid density, a grid orientation or a typeset, between a first partial region and a second partial region of a further optical, visually perceptible item of information of the diffractive security element, in particular in the form of a symbol, logo, image, sign, alphanumeric character or a number, and/or a deviation from a symmetry between a first partial region and a second partial region of a further optical, visually perceptible item of information of the diffractive security element, in particular in the form of a symbol, logo, image, sign, alphanumeric character or a number, and/or a visually non-recognisable item of information which can be automatically detected using the sensor, and/or
the at least one predefined item of optical information is formed by a variation of at least one relief parameter of a relief structure of the security element (1) between at least one first zone and at least one second zone of the security element, wherein the relief structure provided in the first and/or second zone is in particular a diffractive structure, a zero-order diffraction structure, a blazed grating, a macrostructure, in particular a lens structure or microprism structure, a mirror surface, a mat structure, in particular an anisotropic or isotropic mat structure.

6. Method according to one of the preceding claims,
**characterised in that**
the at least one predefined item of optical information is generated during the capture of the image sequence by a moiré effect between a periodic grid of the security element (1) and a periodic grid of the sensor (31), and/or by a diffractive effect in a wavelength range outside the visible spectrum, in particular in the infrared range.

7. Method according to one of the preceding claims,
**characterised in that**
it is verified whether at least one further item of optical information is present in at least one individual image of the image sequence, wherein the at least one further item of optical information is in particular an item of individualisation information, in particular an item of individualisation information that is random, pseudo-random and/or generated by algorithms.

8. Method according to one of the preceding claims,
**characterised in that**
step b) is carried out by means of a software program executed on a computing device of the hand-held device (3), wherein preferably the software program and/or a database allocated to the software program are updated at predefined intervals, in particular each time before the method is carried out, via a telecommunications connection, in particular an Internet connection, or that step b) is carried out by means of a software program executed on a computing device different from the hand-held device (3), to which computing device the image sequence captured in step a) is transmitted via a telecommunications connection, in particular an Internet connection.

9. Method according to one of the preceding claims,
**characterised in that**
it is verified in a further step c) whether at least one further item of predefined optical information which is present in the case of a known forgery of the optically variable security element (1) and is not present in the case of a genuine optically variable security element (1) is present in at least one individual image of the image sequence, wherein preferably if the at least one predefined item of optical information is not present and if the at least one further item of predefined optical information is not present, a message is transmitted to the computing device other than the hand-held device (3), which message comprises location and/or time information and at least one individual image of the image sequence.

10. Device (3), in particular hand-held device with a sensor (31) for capturing an image sequence with at least one individual image of a security element (1) and a control device, which is configured so that it executes the following steps:
a) capturing an image sequence having at least one individual image of the security element (1) by means of the sensor (31);
b) verifying whether at least one predefined item of optical information is present in at least one individual image of the image sequence,
wherein the image sequence comprises a plurality of individual images of the security element (1), in particular comprises more than 2 individual images of the security element (1), and wherein it is verified using at least two individual images of the image sequence whether the security element (1) comprises an optically variable structure, **characterised in that**, in step b), it is initially verified whether a predefined object is present in at least one individual image of the image sequence, wherein, when verifying whether the at least one predefined item of optical information of the optically variable security element (1) is present, the contour of the predefined object is determined from at least one individual image of the image sequence, and wherein at least one partial region of the individual image, which is positioned in a predefined position relative to the contour of a predefined object and which comprises at least one pixel and/or at least one group of pixels of the individual image, is selected and at least one property of the at least one pixel and/or of the at least one group of pixels of the at least one selected partial region is compared with a corresponding setpoint value.

## Revendications

1. Procédé d'authentification d'un élément de sécurité optiquement variable (1), en particulier d'un élément de sécurité diffractif, avec les étapes :
a) d'enregistrement d'une suite d'images avec au moins une image individuelle de l'élément de sécurité (1) au moyen d'un capteur (31) en particulier d'un appareil portable (3), de préférence d'un téléphone intelligent, d'une tablette ou d'un assistant numérique personnel ;
b) de vérification si au moins une information optique prédéfinie est présente dans au moins une image individuelle de la suite d'images,
dans lequel la suite d'images comprend une pluralité d'images individuelles de l'élément de sécurité (1), en particulier plus de 2 images individuelles de l'élément de sécurité (1), dans lequel il est vérifié à l'aide d'au moins deux images individuelles de la suite d'images si l'élément de sécurité (1) comprend une structure optiquement variable,
**caractérisé en ce que**
il est d'abord vérifié lors de l'étape b) si un objet prédéfini est présent dans au moins une image individuelle de la suite d'images, dans lequel lors de la vérification pour savoir si l'au moins une information optique prédéfinie de l'élément de sécurité optiquement variable (1) est présente, le contour de l'objet prédéfini est déterminé à partir d'au moins une image individuelle de la suite d'images et dans lequel au moins une zone partielle de l'image individuelle, laquelle est positionnée dans une position prédéfinie par rapport au contour d'un objet prédéfini et laquelle comprend au moins un pixel et/ou au moins un groupe de pixels de l'image individuelle, est choisie et au moins une propriété de l'au moins un pixel et/ou de l'au moins un groupe de pixels de l'au moins une zone partielle choisie est comparée à une valeur théorique correspondante.

2. Procédé selon la revendication 1,
**caractérisé en ce**
**que** pour vérifier si l'objet prédéfini est présent, une comparaison de l'au moins une image individuelle à un jeu de données d'entraînement enregistré au préalable est effectuée au moyen de l'algorithme d'identification d'image, dans lequel en particulier une multitude d'images sont créées en particulier pour enregistrer le jeu de données d'entraînement, dans lequel une première quantité partielle des images présente respectivement l'objet prédéfini et une deuxième quantité partielle des images ne présente pas respectivement l'objet prédéfini, et dans lequel toutes les coordonnées d'image respectives des caractéristiques à identifier de l'objet prédéfini sont associées à chaque image de la première quantité partielle.

3. Procédé selon l'une quelconque des revendications précédentes,
**caractérisé en ce**
**que** pendant l'enregistrement de la suite d'images lors de l'étape a), un angle entre le capteur et l'élément de sécurité et/ou un angle entre une source de lumière et l'élément de sécurité (1) est modifié, dans lequel en particulier pendant l'enregistrement de la suite d'images lors de l'étape a), une position relative de l'appareil portable (3) par rapport à une position prédéfinie est enregistrée au moyen d'un capteur de position de l'appareil portable (3) pour chaque image individuelle de la suite d'images et est associée à l'image individuelle respective, et dans lequel de préférence pour vérifier si l'élément de sécurité (1) comprend une structure optiquement variable, deux images individuelles de la suite d'images, qui ont été enregistrées avec un angle d'observation et/ou d'éclairage différent, sont comparées lors de l'étape b).

4. Procédé selon la revendication 3,
**caractérisé en ce**
**que** pour vérifier si l'élément de sécurité (1) comprend une structure optiquement variable, des pixels et/ou des groupes de pixels respectivement correspondants, en particulier des zones partielles, des images individuelles sont comparés.

5. Procédé selon l'une quelconque des revendications précédentes,
**caractérisé en ce**
**que** l'au moins une information optique prédéfinie comprend un écart d'une propriété graphique, en particulier d'une largeur de ligne, d'une valeur de couleur, d'une valeur de tonalité, d'une clarté, d'une densité de trame, d'une orientation de trame ou d'une composition, entre une première zone partielle et une deuxième zone partielle d'une autre information optique visuellement perceptible de l'élément de sécurité diffractif, en particulier sous la forme d'un symbole, d'un logo, d'une image, d'un caractère, d'un caractère alphanumérique ou d'un chiffre, et/ou un écart d'une symétrie entre une première zone partielle et une deuxième zone partielle d'une autre information optique visuellement perceptible de l'élément de sécurité diffractif, en particulier sous la forme d'un symbole, d'un logo, d'une image, d'un caractère, d'un caractère alphanumérique ou d'un chiffre, et/ou une information non identifiable visuellement, qui peut être détectée mécaniquement avec le capteur, et/ou
**que** l'au moins une information optique prédéfinie est formée par une variation d'au moins un paramètre de relief d'une structure de relief de l'élément de sécurité (1) entre au moins une première zone et au moins une deuxième zone de l'élément de sécurité, dans lequel la structure en relief prévue dans la première et/ou la deuxième zone est en particulier une structure diffractive, une structure de diffraction d'ordre zéro, un réseau blaze, une macrostructure, en particulier une structure à lentilles ou une structure à microprismes, une surface miroir, une structure mate, en particulier une structure mate anisotrope ou isotrope.

6. Procédé selon l'une quelconque des revendications précédentes,
**caractérisé en ce**
**que** l'au moins une information optique prédéfinie est générée lors de l'enregistrement de la suite d'images par un effet de moiré entre une trame périodique de l'élément de sécurité (1) et une trame périodique du capteur (31) et/ou par un effet diffractif dans une plage de longueurs d'onde en dehors du spectre visible, en particulier dans l'infrarouge.

7. Procédé selon l'une quelconque des revendications précédentes,
**caractérisé en ce**
**qu'**il est vérifié si au moins une autre information optique est présente dans au moins une image individuelle de la suite d'images, dans lequel l'au moins une autre information optique est en particulier une information d'individualisation, en particulier une information d'individualisation aléatoire, pseudo-aléatoire et/ou générée par algorithme.

8. Procédé selon l'une quelconque des revendications précédentes,
**caractérisé en ce**
**que** l'étape b) est mise en oeuvre au moyen d'un programme de logiciel exécuté sur un dispositif de calcul de l'appareil portable (3), dans lequel de préférence le programme de logiciel et/ou une base de données associée au programme de logiciel sont mis à jour à des intervalles prédéfinis, en particulier avant chaque mise en oeuvre du procédé, par l'intermédiaire d'une connexion de communication, en particulier d'une connexion Internet, ou que l'étape b) est mise en œuvre au moyen d'un programme de logiciel exécuté sur un dispositif de calcul autre que l'appareil portable (3), auquel la suite d'images enregistrée lors de l'étape a) est transférée par l'intermédiaire d'une connexion de télécommunication, en particulier d'une connexion Internet.

9. Procédé selon l'une quelconque des revendications précédentes,
**caractérisé en ce**
**que** lors d'une autre étape c), il est vérifié si au moins une autre information optique prédéfinie est présente dans au moins une image individuelle de la suite d'images, laquelle est présente dans le cas d'une falsification connue de l'élément de sécurité optiquement variable (1) et n'est pas présente dans le cas d'un élément de sécurité optiquement variable (1) authentique, dans lequel de préférence en l'absence de l'au moins une information optique prédéfinie et en l'absence de l'au moins une autre information optique prédéfinie, une notification est transmise au dispositif de calcul autre que l'appareil portable (3), laquelle comprend une information de lieu et/ou de temps ainsi qu'au moins une image individuelle de la suite d'images.

10. Appareil (3), en particulier appareil portable avec un capteur (31) pour enregistrer une suite d'images avec au moins une image individuelle d'un élément de sécurité (1) et un système de commande, qui est configuré de telle sorte qu'il exécute les étapes suivantes :
a) l'enregistrement d'une suite d'images avec au moins une image individuelle de l'élément de sécurité (1) au moyen du capteur (31) ;
b) la vérification si au moins une information optique prédéfinie est présente dans au moins une image individuelle de la suite d'images,
dans lequel la suite d'images comprend une pluralité d'images individuelles de l'élément de sécurité (1), en particulier comprend plus de 2 images individuelles de l'élément de sécurité (1), et dans lequel il est vérifié à l'aide d'au moins deux images individuelles de la suite d'images si l'élément de sécurité (1) comprend une structure optiquement variable, **caractérisé en ce que** lors de l'étape b), il est vérifié en premier lieu si un objet prédéfini est présent dans au moins une image individuelle de la suite d'images, dans lequel lors de la vérification si l'au moins une information optique prédéfinie de l'élément de sécurité optiquement variable est présente, le contour de l'objet prédéfini est déterminé à partir d'au moins une image individuelle de la suite d'images et dans lequel au moins une zone partielle de l'image individuelle, laquelle est positionnée dans une position prédéfinie par rapport au contour d'un objet prédéfini et laquelle comprend au moins un pixel et/ou au moins un groupe de pixels de l'image individuelle, est choisie et au moins une propriété de l'au moins un pixel et/ou de l'au moins un groupe de pixels de l'au moins une zone partielle choisie est comparée à une valeur théorique correspondante.
